(19) Europäisches Patentamt
European Patent Office
Office européen des brevets

(11) **EP 4 507 297 A1**

(12) **EUROPEAN PATENT APPLICATION**
published in accordance with Art. 153(4) EPC

(43) Date of publication:
**12.02.2025 Bulletin 2025/07**

(21) Application number: **23878719.6**

(22) Date of filing: **07.07.2023**

(51) International Patent Classification (IPC):
***H04N 19/11*** *(2014.01)*

(52) Cooperative Patent Classification (CPC):
**H04N 19/11; H04N 19/159; H04N 19/176;
H04N 19/186; H04N 19/48**

(86) International application number:
**PCT/CN2023/106438**

(87) International publication number:
**WO 2024/082722 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 CN 202211286598**

(71) Applicant: **Tencent Technology (Shenzhen)
Company Limited
Shenzhen, Guangdong 518057 (CN)**

(72) Inventors:
• **KUANG, Wei**
  **Shenzhen, Guangdong 518057 (CN)**
• **ZHANG, Hongbin**
  **Shenzhen, Guangdong 518057 (CN)**
• **ZHANG, Han**
  **Shenzhen, Guangdong 518057 (CN)**

(74) Representative: **EP&C
P.O. Box 3241
2280 GE Rijswijk (NL)**

(54) **VIDEO PROCESSING METHODS, AND RELATED DEVICE**

(57) A video processing method, which is executed by a computer device and comprises: performing DIMD processing on a current block in a video bitstream to obtain a DIMD result of the current block, the video bitstream comprising correction indication information for the DIMD of the current block, and the current block being an encoding unit in the video bitstream for decoding processing (S601); according to the correction indication information, correcting the DIMD result of the current block (S602); and, on the basis of the corrected DIMD result, performing prediction on an intra prediction mode of the current block to obtain a predicted value of the current block, the predicted value of the current block being used for reconstructing a decoded image corresponding to the current block (S603).

Perform DIMD processing on a current block in a video bitstream, to obtain a DIMD result for the current block, the video bitstream including correction indication information for the DIMD of the current block, and the current block being a coding unit in the video bitstream for decoding — S601

↓

Correct the DIMD result for the current block according to the correction indication information — S602

↓

Predict an intra prediction mode of the current block based on a corrected DIMD result, to obtain a predicted value for the current block, the predicted value for the current block being configured for reconstructing a decoded image corresponding to the current block — S603

FIG. 6

**Description**

RELATED APPLICATION

This application claims priority to Chinese Patent Application No. 2022112865986, filed with the China National Intellectual Property Administration on October 20, 2022, and entitled "VIDEO PROCESSING METHOD AND RELATED DEVICE".

FIELD OF THE TECHNOLOGY

This application relates to the field of audio and video technologies, and specifically, to the field of video coding technologies, and in particular, to a video processing method, a video processing apparatus, a computer device, a computer-readable storage medium, and a computer program product.

BACKGROUND OF THE DISCLOSURE

In a decoder-side intra mode derivation (DIMD) technology, an intra prediction mode of a current block is derived by calculating a gradient of pixels in a neighboring template region of the current block in a video. However, it is found in practice that a derivation result of the current DIMD technology may not be suitable for the current block because a texture characteristic of the neighboring template region cannot fully represent a texture characteristic of the current block. This affects prediction accuracy for the current block.

SUMMARY

According to embodiments provided in this application, a video processing method and apparatus, a computer device, a computer-readable storage medium, and a computer program product are provided.
According to an aspect, an embodiment of this application provides a video processing method, performed by a computer device. The method may include:

performing DIMD processing on a current block in a video bitstream, to obtain a DIMD result for the current block; the video bitstream including correction indication information for the DIMD of the current block, and the current block being a coding unit in the video bitstream for decoding processing;

correcting the DIMD result for the current block according to the correction indication information; and

predicting an intra prediction mode of the current block based on a corrected DIMD result, to obtain a predicted value for the current block, the predicted value for the current block being configured for reconstructing a decoded image corresponding to the current block.

According to another aspect, an embodiment of this application provides another video processing method, performed by a computer device. The method may include:

performing DIMD processing on a current block of a video, to obtain a DIMD result for the current block; the current block being a coding unit in the video bitstream for encoding processing;

generating correction indication information for the DIMD of the current block according to the DIMD result for the current block;

correcting the DIMD result for the current block according to the correction indication information;

predicting an intra prediction mode of the current block based on a corrected DIMD result, to obtain a predicted value for the current block, the predicted value for the current block being configured for reconstructing a decoded image corresponding to the current block; and

encoding the video based on the correction indication information and the predicted value for the current block, to generate a video bitstream.

According to an aspect, an embodiment of this application further provides a video processing apparatus, including:

a processing unit, configured to perform DIMD processing on a current block in a video bitstream, to obtain a DIMD result for the current block, the video bitstream including correction indication information for the DIMD of the current block, and the current block being a coding unit in the video bitstream for decoding processing;

a correction unit, configured to correct the DIMD result for the current block according to the correction indication information; and

a prediction unit, configured to predict an intra prediction mode of the current block based on a corrected DIMD result, to obtain a predicted value for the current block, the predicted value for the current block being configured for reconstructing a decoded image corresponding to the current block.

According to another aspect, an embodiment of this application further provides another video processing apparatus, including:

a processing unit, configured to perform DIMD processing on a current block of a video, to obtain a DIMD result for the current block, the current block being a coding unit in the video bitstream for encoding processing;

the processing unit being further configured to generate correction indication information for the DIMD of the current block according to the DIMD result for the current block;

a correction unit, configured to correct the DIMD result for the current block according to the correction indication information; and

a prediction unit, configured to predict an intra prediction mode of the current block based on a corrected DIMD result, to obtain a predicted value for the current block, the predicted value for the current block being configured for reconstructing a decoded image corresponding to the current block; and

the processing unit being further configured to encode the video based on the correction indication information and the predicted value for the current block, to generate a video bitstream.

According to an aspect, an embodiment of this application further provides a computer device, including: a processor, configured to execute computer-readable instructions; and a computer-readable storage medium, the computer-readable storage medium having the computer-readable instructions stored therein, the computer-readable instructions, when executed by the processor, performing the above video processing method.
According to an aspect, an embodiment of this application further provides a computer-readable storage medium. The computer-readable storage medium has computer-readable instructions stored therein. The computer-readable instructions, when executed by a processor, perform the above video processing method.
According to an aspect, an embodiment of this application further provides a computer program product. The computer program product includes computer-readable instructions. The computer-readable instructions, when executed by a processor, implement the above video processing method.
Details of one or more embodiments of this application are provided in the accompanying drawings and descriptions below. Other features, objectives, and advantages of this application become apparent from the specification, the accompanying drawings, and the claims.

BRIEF DESCRIPTION OF THE DRAWINGS

To describe the technical solutions in embodiments of this application or the related art more clearly, the following briefly introduces the accompanying drawings required for describing the embodiments or the related art. Apparently, the accompanying drawings in the following description show only some embodiments of this application, and a person of ordinary skill in the art may still derive other accompanying drawings from these accompanying drawings without creative efforts.

FIG. 1 is a schematic diagram of an intra prediction mode defined for luminance prediction by VVC according to an exemplary embodiment of this application.

FIG. 2 is a schematic diagram of a DIMD technology according to an exemplary embodiment of this application.

FIG. 3 is a schematic architectural diagram of a video processing system according to an exemplary embodiment of this application.

FIG. 4 is a sequence diagram of a video processing method according to an exemplary embodiment of this application.

FIG. 5 is a schematic flowchart of a video processing method according to an exemplary embodiment of this application.

FIG. 6 is a schematic flowchart of a video processing method according to another exemplary embodiment of this application.

FIG. 7 is a schematic structural diagram of a video processing apparatus according to an exemplary embodiment of this application.

FIG. 8 is a schematic structural diagram of a video processing apparatus according to another exemplary embodiment of this application.

FIG. 9 is a schematic structural diagram of a computer device according to an exemplary embodiment of this application.

DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.
Technical terms involved in this application are described below.

1. Versatile video coding (VVC)

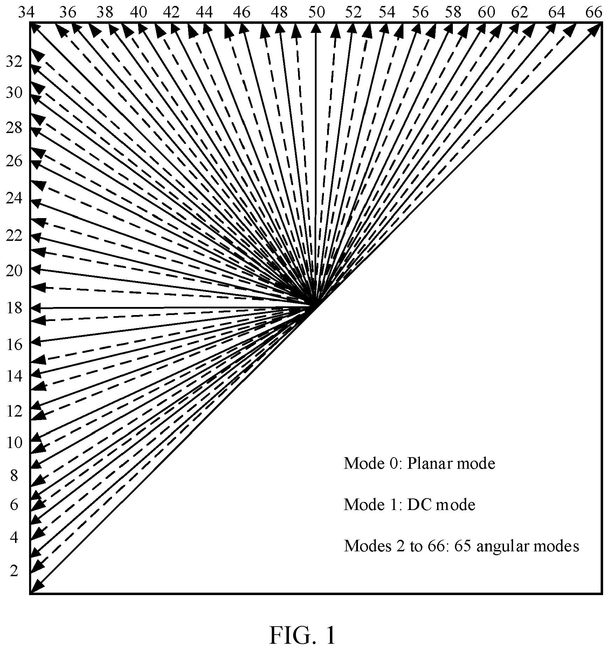

VVC is a video coding standard that has high coding efficiency, and also has relatively high coding complexity. During coding by using the VVC, each frame of image in a video is divided into coding tree units (CTUs) arranged tightly with a same size. The CTU may be flexibly divided into smaller coding units (CUs) according to differences between local features of an encoded image. The CU, which may also be referred to as a block, is the most basic element in a codec process. In subsequent embodiments of this application, a current block refers to a CU being encoded in a video or a CU being decoded in a video bitstream.
An intra prediction technology of the VVC may be divided into a prediction mode for a luminance component and a prediction mode for a chrominance component. The prediction mode of the luminance component eliminates spatial correlation of images in a block (CU)-based multi-directional intra prediction manner, whose prediction direction is fine and flexible. FIG. 1 is a schematic diagram of an intra prediction mode defined for luminance prediction by VVC according to an exemplary embodiment of this application. The VVC defines 65 different basic intra prediction directions for luminance prediction, and each intra prediction direction corresponds to an intra angular mode. Therefore, the VVC defines 65 intra angular modes. Mode indexes of the 65 intra angular modes are respectively 2 to 66, for example, a mode index 18 of a horizontal mode, a mode index 34 of a diagonal mode, a mode index 50 of a vertical mode, a mode index 66 of an anti-diagonal mode 1, and a mode index 2 of an anti-diagonal mode 2. Further, the VVC also defines a planar mode and a direct current (DC) mode for the luminance prediction. A mode index of the planar mode is 0, and a mode index of the DC mode is 1. The DC mode is suitable for a large-area flat region. The planar mode is suitable for a case of pixel gradations, that is, for a region in which pixel values slowly change. The VVC defines a total of 67 intra prediction modes for the luminance prediction, respectively the DC mode, the planar mode, and an intra angular mode set including 65 intra angular modes.
Prediction modes for a chrominance component defined by the VVC may include 5 conventional intra prediction modes, including the planar mode, the DC mode, the horizontal direction mode, the vertical direction mode, and a derived mode (DM). Considering correlation between luminance and chrominance, the prediction modes for the chrominance component defined by the VVC further include a cross-component linear model (CCLM) prediction mode. In addition, the prediction modes for the chrominance component defined by the VVC further include an LM_L mode in which prediction is performed using a left-neighboring pixel alone, and an LM_A mode in which prediction is performed using an upper-neighboring pixel alone.

2. Decoder-side intra mode derivation (DIMD)

The DIMD technology is a technology proposed in a process of VVC standardization. The DIMD technology is used at an encoder side to derive (or predict) the intra prediction mode of the current block by calculating gradients of neighboring pixels of the current block. At a decoder side, the intra prediction mode of the current block is obtained by performing a same derivation (or prediction) process using the DIMD technology, to restore reconstructed YUV (a color coding method, where Y represents luminance (or luma), namely, a gray-level value; and U and V represent chrominance (or chroma)) of the current block. This technology is not used in the process of VVC standardization due to high complexity introduced at the decoder side. To explore a next generation compression standard, the joint video experts team (JVET) established a latest enhanced compression model (ECM) reference platform and added the DIMD technology hereto. The DIMD technology may derive (or predict) the same intra prediction mode for the current block at the encoder side and the decoder side, and reconstruct the current block by the derived (or predicted) intra prediction mode. Therefore, the DIMD technology does not need to perform coding and transmission on the intra prediction mode, thereby reducing coding mode bits and reducing a size of a transmission bitstream.

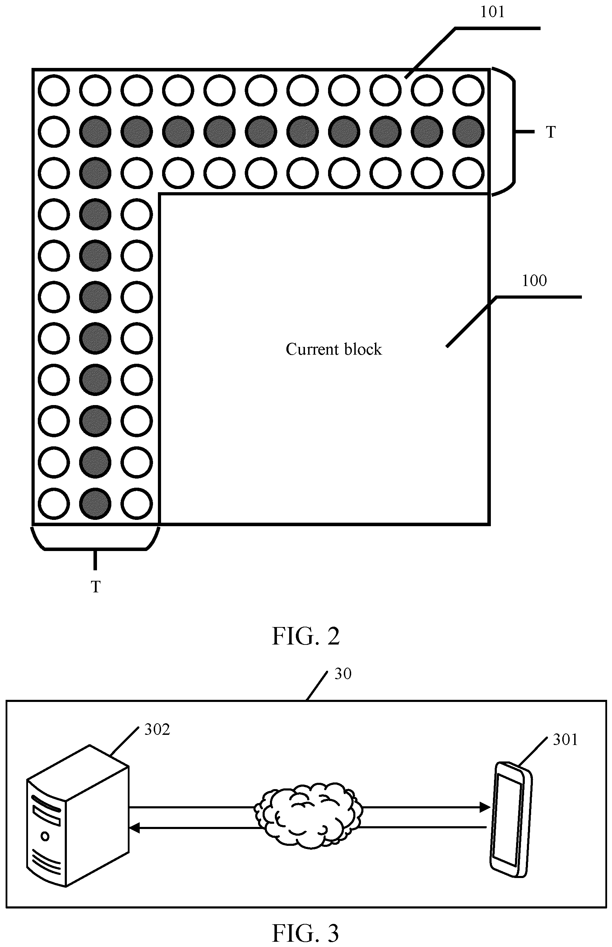

The DIMD technology uses reconstructed pixels of a neighboring template region of the current block to derive (or predict) the intra prediction mode of the current block. FIG. 2 is a schematic diagram of a DIMD technology according to an exemplary embodiment of this application. A region 100 is a current block to be predicted. A region 101 is a neighboring template region of the current block, where a width of the template region is 3 pixels, that is, T=3.

(1) A DIMD process for the luminance component of the current block:

A horizontal gradient $G_x$ and a vertical gradient $G_y$ may be respectively calculated for luminance component pixels (namely, gray pixels in FIG. 2) in a center of the template region using a $3 \times 3$ horizontal sober filter and vertical sober filter in the DIMD process, which is specifically Formula 1.1 and Formula 1.2 below:

$$G_x = \begin{bmatrix} -1 & 0 & 1 \\ -2 & 0 & 2 \\ -1 & 0 & 1 \end{bmatrix} * A \qquad \text{Formula 1.1;}$$

and

$$G_y = \begin{bmatrix} -1 & -2 & -1 \\ 0 & 0 & 0 \\ 1 & 2 & 1 \end{bmatrix} * A \qquad \text{Formula 1.2.}$$

In Formula 1.1 and Formula 1.2, A represents a small image with a size of $3 \times 3$ in the template region.

An angle θ of the luminance component pixels corresponding to the center of the template region can be calculated by using Formula 2.1 below. The angle θ of the luminance component pixels may be converted to one of the 65 intra angular modes in the VVC (namely, the 65 intra angular modes corresponding to the mode indexes 2 to 66 shown in FIG. 1). Formula 2.1 is specifically as follows:

$$\theta = \text{atan}\left(\frac{G_x}{G_y}\right) \qquad \text{Formula 2.1.}$$

An accumulated amplitude value G of the angle θ of the luminance component pixels is calculated by using Formula 3.1 below:

$$G = |G_x| + |G_y| \qquad \text{Formula 3.1.}$$

The above process is repeated for all luminance component pixels in the center of the template region, angles of the luminance component pixels in the center of the template region, intra angular modes into which the angles are converted, and accumulated amplitude values of the angles can be obtained. Two intra angular modes with the highest accumulated amplitude values are respectively used as the first luminance derivation mode of the DIMD (which may also be referred to as a first luminance derivation mode of the DIMD in the embodiments of this application, denoted as $M_1$) and the second luminance derivation mode of the DIMD (which may also be referred to as a second luminance derivation mode of the DIMD in the embodiments of this application, denoted as $M_2$). The intra prediction mode of the current block is predicted separately using $M_1$, $M_2$, and the planar mode. Weighted fusion is performed on a predicted value of $M_1$, a predicted value of $M_2$, and a predicted value of the planar mode, to obtain a predicted value of the luminance component of the current block.

In a process of performing the weighted fusion on the predicted value of $M_1$, the predicted value of $M_2$, and the predicted value of the planar mode, in an implementation, a weight of the planar mode may be fixed at 21/64, and a remaining weight 43/64 is allocated to two luminance derivation modes of the DIMD. Weights of the two luminance derivation modes of the DIMD are related to the accumulated amplitude values thereof, as shown specifically in Formula 4.1 and Formula 4.2 below:

$$w_1 = \frac{43}{64} \times \frac{ampl(M_1)}{ampl(M_1)+ampl(M_2)} \qquad \text{Formula 4.1;}$$

and

$$w_2 = \frac{43}{64} \times \frac{ampl(M_2)}{ampl(M_1)+ampl(M_2)} \qquad \text{Formula 4.2.}$$

In Formula 4.1, $w_1$ is the weight of the first luminance derivation mode of the DIMD $M_1$, and *ampl*($M_1$) is the accumulated amplitude value of $M_1$. In Formula 4.2, $w_2$ is the weight of the second luminance derivation mode of the DIMD $M_2$, and *ampl*($M_2$) is the accumulated amplitude value of $M_2$. In particular, when the horizontal gradients $G_x$ and the vertical gradients $G_y$ of all the luminance component pixels in the center of the template region are 0, or the template region does not exist, $M_1$ is set to the planar mode, and the predicted value of the planar mode is used as the predicted value of the luminance component of the current block.

(2) A DIMD process for the chrominance component of the current block:

The DIMD is to calculate the horizontal gradients $G_x$ and the vertical gradients $G_y$ of all pixels in the template region (including the luminance component pixels and chrominance component pixels) using a sober filter. Similar to (1), angles of the pixels in the template region, intra prediction modes into which the angles are converted, and accumulated amplitude values of the angles can be obtained. An intra prediction mode with the largest accumulated amplitude value is used as a chrominance derivation mode of the DIMD. The intra prediction mode of the current block is predicted using the chrominance derivation mode of the DIMD, and a predicted value of the chrominance derivation mode of the DIMD is directly used as a predicted value of a chrominance component of the current block. In contrast, the DIMD process for the chrominance component differs from the DIMD process for the luminance component in that weighted fusion needs to be performed on the predicted value of the luminance derivation mode of the DIMD with predicted values of other modes (for example, the planar mode). However, weighted fusion may not be performed on the predicted value of the chrominance derivation mode of the DIMD with predicted values of other modes.

As can be seen from the above description, the intra prediction mode of the current block can be predicted by using the DIMD technology by performing gradient calculation on the pixels in the neighboring template region of the current block. Since the neighboring template region of the current block is available at both the encoder side and the decoder side, the same DIMD process may be performed at the encoder side and the decoder side to obtain the same intra prediction mode of the current block, so that the coding and transmission of the intra prediction mode is omitted, and codec performance is improved. However, the texture characteristic of the neighboring template region cannot fully represent the texture characteristic of the current block. Therefore, the intra prediction mode that is calculated and predicted through the DIMD process for the pixels in the template region may not be suitable for the current block, which affects prediction accuracy of the current block. Based on this, an embodiment of this application provides a video processing solution based on the DIMD process. After a DIMD result is obtained by performing DIMD processing on the current block in a video, the DIMD result for the current block may first be corrected according to correction indication information. Derivation accuracy and adaptability of the DIMD can be improved through the correction. The intra prediction mode of the current block is predicted based on the corrected DIMD result, so that the predicted value with high accuracy of the current block can be obtained, achieving better restoration of a reconstructed decoded image corresponding to the current block, thereby improving the codec performance.

A video processing system provided in an embodiment of this application is described below.

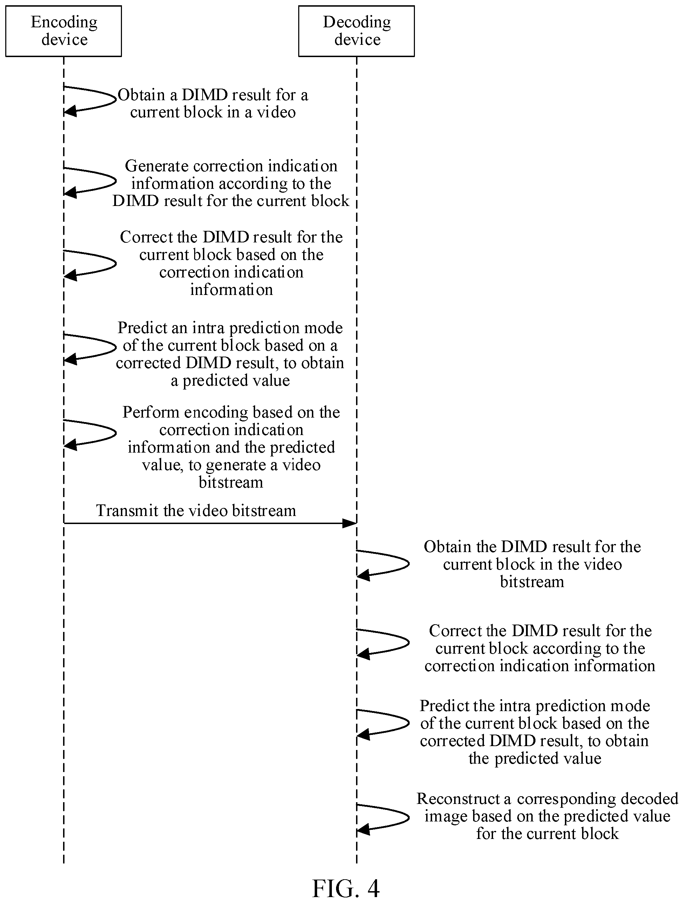

FIG. 3 is a schematic architectural diagram of a video processing system according to an exemplary embodiment of this application. The video processing system 30 may include an encoding device 301 and a decoding device 302. The encoding device 301 is located at an encoder side, and the decoding device 302 is located at a decoder side. The encoding device 301 may be a terminal, or may be a server. The decoding device 302 may be a terminal, or may be a server. A communication connection may be established between the encoding device 301 and the decoding device 302. In this embodiment of this application, the terminal may be a smartphone, a tablet computer, a notebook computer, a desktop computer, a smart speaker, a smartwatch, a vehicle-mounted terminal, a smart television, or the like, but is not limited thereto. The server may be an independent physical server, or may be a server cluster or a distributed system formed by a plurality of physical servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. As shown in FIG. 4, a working procedure of the video processing system in this embodiment of this application generally includes:

1. Working procedure at the encoder side:

(1) The encoding device 301 may obtain a DIMD result for a current block in a video, and may specifically perform DIMD processing on the current block in the video, to obtain the DIMD result for the current block. As described above, for a luminance component of the current block, the DIMD result may include two luminance derivation modes of the DIMD, respectively a first luminance derivation mode of the DIMD $M_1$ and a second luminance derivation mode of the DIMD $M_2$. For a chrominance component of the current block, the DIMD result may include a chrominance derivation mode of the DIMD.

(2) The encoding device 301 generates correction indication information for the DIMD of the current block according to the DIMD result for the current block. This operation is mainly for determining whether the DIMD result for the current block needs to be corrected and what correction value needs to be used for correction. In a specific implementation, the encoding device 301 may perform determining according to rate-distortion optimization (RDO), and generate the correction indication information for the DIMD of the current block according to a determining result. A determining process involved in this operation is described in detail in a subsequent implementation. The correction indication information may be configured for indicating whether the DIMD result for the current block needs to be corrected. Further, if the DIMD result for the current block needs to be corrected, the correction indication information may further be configured for indicating the correction value configured for correction.

(3) The encoding device 301 corrects the DIMD result for the current block according to the correction indication information. The correction means additionally applying the correction value indicated in the correction indication information based on the DIMD result, so that the DIMD result can be properly adjusted in direction and size, to improve accuracy of the DIMD.

(4) The encoding device 301 predicts an intra prediction mode of the current block based on a corrected DIMD result, to obtain a predicted value for the current block. The predicted value for the current block is configured for reconstructing a decoded image corresponding to the current block.

(5) The encoding device 301 generates a video bitstream by encoding the video based on the correction indication information and the predicted value for the current block. Specifically, the encoding device 301 may perform transform encoding, quantization, entropy encoding, and so on based on the predicted value for the current block, to obtain the video bitstream, and encapsulate the correction indication information into the video bitstream and transmit the video bitstream to the decoding device 302, so that the decoding device 302 decodes the video bitstream.

2. Working procedure at the decoder side:

(1) The decoding device 302 receives the video bitstream transmitted from the encoding device 301, and performs entropy decoding, inverse quantization, inverse transformation, and so on on the video bitstream.

(2) The decoding device 302 may obtain the DIMD result for the current block in the video bitstream, and may specifically perform DIMD processing on the current block in the video bitstream, to obtain the DIMD result for the current block. The video bitstream includes the correction indication information for the DIMD of the current block.

(3) The decoding device 302 corrects the DIMD result for the current block according to the correction indication information. The correction process of the decoding device 302 is consistent with the correction process of the encoding device 302.

(4) The decoding device 302 predicts the intra prediction mode of the current block based on the corrected DIMD result, to obtain the predicted value for the current block. The predicted value for the current block is configured for reconstructing a decoded image corresponding to the current block.

(5) The decoding device 302 may reconstruct the decoded image corresponding to the current block using the predicted value for the current block, thereby restoring reconstructed YUV of the current block.

As can be seen from the above, in this embodiment of this application, the same DIMD process may be performed at the encoder side and the decoder side. The DIMD result may be corrected according to the same correction indication information. The derivation accuracy and the adaptability of the DIMD can be improved through the correction. The intra prediction mode of the current block is predicted based on the corrected DIMD result, so that the predicted value with high accuracy of the current block can be obtained, achieving better restoration of a reconstructed decoded image corresponding to the current block, thereby improving the codec performance.

A video processing method provided in an embodiment of this application is described from the encoder side in detail below.

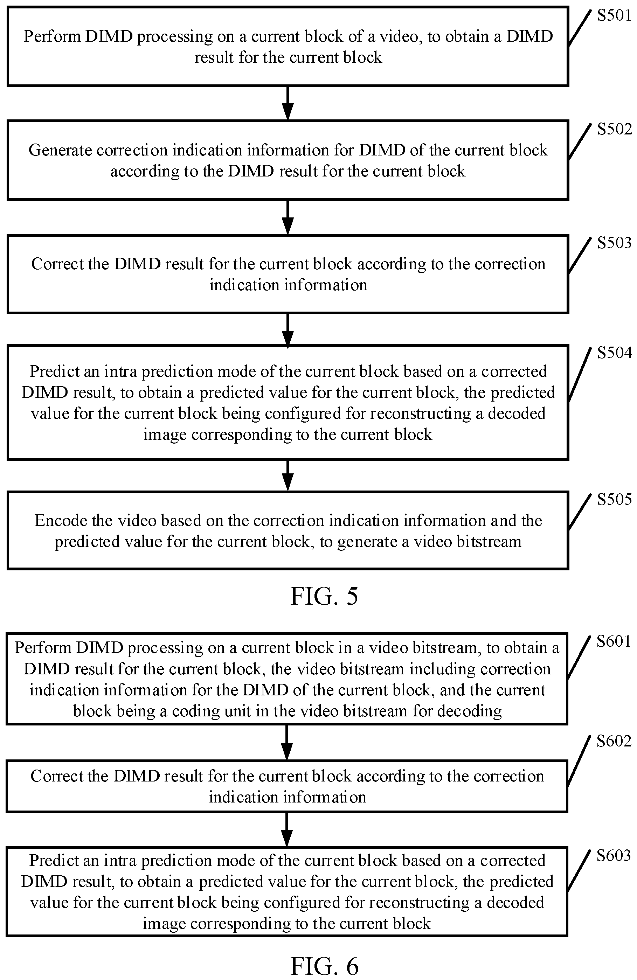

FIG. 5 is a schematic flowchart of a video processing method according to an exemplary embodiment of this application. The video processing method may be performed by the encoding device in the foregoing video processing system. In other words, the embodiment shown in FIG. 5 may be a procedure of the video processing method at the encoder side. The video processing method may include the following operations S501 to S505:

S501. Perform DIMD processing on a current block of a video, to obtain a DIMD result for the current block.

The current block is a CU being encoded by an encoding device in a video. The DIMD result obtained by performing DIMD processing on the current block includes two aspects. In one aspect, for a luminance component of the current block, the DIMD result may include two luminance derivation modes of the DIMD, respectively a first luminance derivation mode of the DIMD $M_1$ and a second luminance derivation mode of the DIMD $M_2$. In the other aspect, for a chrominance component of the current block, the DIMD result may include a chrominance derivation mode of the DIMD.

S502. Generate correction indication information for the DIMD of the current block according to the DIMD result for the current block.

The correction indication information may be configured for indicating whether the DIMD result for the current block needs to be corrected. Further, if the DIMD result for the current block needs to be corrected, the correction indication information may further be configured for indicating a correction value configured for correction. In a feasible implementation, the encoding device may determine, according to rate-distortion optimization (RDO), whether the DIMD result for the current block needs to be corrected, and what correction value needs to be used for the correction. The correction indication information for the DIMD of the current block is then generated according to a determining result.

S503. Correct the DIMD result for the current block according to the correction indication information.

If the correction indication information indicates that the DIMD result for the current block does not need to be corrected, the intra prediction mode of the current block may be directly predicted based on an uncorrected DIMD result according to an existing DIMD process, namely, compatible with existing technologies. If the correction indication information indicates that the DIMD of the current block needs to be corrected, the correction value indicated in the correction indication information needs to be additionally applied based on the DIMD result, to properly adjust the DIMD result in direction and size to improve the accuracy of the DIMD.

S504. Predict an intra prediction mode of the current block based on a corrected DIMD result, to obtain a predicted value for the current block. The predicted value for the current block is configured for reconstructing a decoded image corresponding to the current block.

S505. Encode the video based on the correction indication information and the predicted value for the current block, to generate a video bitstream.

The encoding device may perform transform encoding, quantization, entropy encoding, and so on based on the predicted value for the current block, to obtain the video bitstream, and encapsulate the correction indication information into the video bitstream and transmit the video bitstream to the decoding device, so that the decoding device decodes the video bitstream.

In this embodiment of this application, after performing DIMD processing on the current block in the video to obtain the DIMD result, the encoder side may generate the correction indication information based on the DIMD result, and correct the DIMD result for the current block according to the correction indication information. Derivation accuracy and adaptability of the DIMD can be improved through the correction. The intra prediction mode of the current block is predicted based on the corrected DIMD result. In this way, the predicted value with high accuracy of the current block can be obtained, achieving better restoration of a reconstructed decoded image corresponding to the current block, so that the encoding performance is improved. In addition, the encoder side transmits the correction indication information through the video bitstream to the decoder side, to indicate that the decoder side can perform the same correction processing on the DIMD result, improving the decoding performance.

Relevant content of the correction indication information related to the encoder side of this embodiment of this application is described in detail below.

In an embodiment, the DIMD result includes a derivation mode of the DIMD (for example, a luminance derivation mode of the DIMD, a chrominance derivation mode of the DIMD). The process of the encoding device performing operation S502, namely, a process of determining whether the DIMD result for the current block needs to be corrected according to the RDO, and what correction value needs to be used for the correction, and generating the correction indication information according to a determining result, specifically includes the following operations s11 to s17:

s11. Obtain a correction value set, the correction value set including one or more values.

In an implementation, the correction value set includes any one or more of the following:

(1) The correction value set may be a predefined value set, for example, the correction value set may be a predefined value set {-9, -6, -3, 3, 6, 9}.

(2) The correction value set may be a value set that is allowed to be adjusted dynamically in a codec process. That is, the values in the correction value set may dynamically changes.

(3) The correction value set may be a value set constructed based on encoded or decoded information, for example, the correction value set may be a value set constructed based on mode indexes of one or more intra angular modes derived in the DIMD process. For another example, the correction value set may be a value set constructed based on encoded or decoded CU sizes. For another example, the correction value set may be a value set constructed based on mode indexes in a most probable mode (MPM) set. For another example, the correction value set may be a value set constructed by using information such as encoded or decoded luminance components and chrominance components.

(4) The correction value set may be a value set defined by a high-level syntactic element. The high-level syntactic element may include, but is not limited to, a sequence parameter set (SPS), a picture parameter set (PPS), a picture header, a slice header, and the like. The SPS is an important part of a video bitstream, configured for storing global parameters of an entire video sequence (namely, all video frames). The PPS is an important part of a video bitstream, configured for storing parameters needed for decoding one or more video frames. The picture header is configured for storing parameters needed for decoding one video frame. One video frame may be encoded into one or more slices. One slice may include one or more CUs. The slice header is configured for storing relevant parameters of the slice. For example, the correction value set may be a value set constructed based on the values for correction specified by any one or more high-level syntactic elements of the SPS, the PPS, the picture header, and the slice header.

In this embodiment, the correction value is determined from the correction value set, and the correction value set supports being configured in a variety of manners, to enrich the correction processing for the derivation mode to adapt to various correction scenarios, improving the codec performance for the video.

s12. Pre-correct the derivation mode of the DIMD using the values in the correction value set.

Pre-correction may be understood as correction in advance. The encoding device sequentially applies the values in the correction value set to the derivation mode of the DIMD, to determine whether the derivation mode of the DIMD needs to be corrected, and attempt to find a most proper correction value for use. An example in which the value set is {-9, -6, -3, 3, 6, 9}, and the derivation mode of the DIMD is an intra angular mode 20 (namely, the intra angular mode with the mode index being 20) is used. To pre-correct the derivation mode of the DIMD using the values in the correction value set, the values in the value set may be respectively applied based on the mode index of the intra angular mode 20. For example, the first value -9 is used to pre-correct the intra angular mode 20, to obtain a mode index 20 - 9 = 11; the second value -6 is used to pre-correct the intra angular mode 20, to obtain a mode index 20 - 6 = 14; and by analogy, the last value 6 is used to pre-correct the intra angular mode 20, to obtain a mode index 20 + 9 = 29.

s13. Obtain a rate-distortion cost set, the rate-distortion cost set including a rate-distortion cost of the derivation mode of the DIMD obtained before the pre-correction and a rate-distortion cost of the derivation mode of the DIMD obtained after the pre-correction performed using the values in the correction value set.

In this embodiment of this application, the encoding device determines to use a mode with the least rate-distortion cost according to the RDO, ensuring accuracy and adaptability of the derivation mode of the DIMD. In this way, in operation s13, the encoding device needs to obtain the rate-distortion cost set, that is, obtain the rate-distortion cost set of the derivation mode of the DIMD obtained before the pre-correction and the rate-distortion costs of the derivation mode of the DIMD obtained after the pre-correction respectively using the values in the correction value set, and finds a smallest value of the rate-distortion cost from the rate-distortion cost set. If the rate-distortion cost of the derivation mode of the DIMD obtained before the pre-correction is a smallest rate-distortion cost, correction of the derivation mode of the DIMD cannot improve the accuracy of the DIMD, and operation s14 may be performed, to determine that the derivation mode of the DIMD does not need to be corrected. If the rate-distortion cost of the derivation mode of the DIMD obtained before the pre-correction is not the smallest rate-distortion cost, the correction for the derivation mode of the DIMD can reduce the rate-distortion cost of the derivation mode of the DIMD, increasing the accuracy and the adaptability of the DIMD to some extent. Therefore, operation s15 may be performed, to determine that the derivation mode of the DIMD needs to be corrected.

s14. Determine that the derivation mode of the DIMD does not need to be corrected if the rate-distortion cost of the derivation mode of the DIMD is the smallest value in the rate-distortion cost set. Then, operation s17 is performed.

s15. Determine that the derivation mode of the DIMD needs to be corrected if the rate-distortion cost of the derivation mode of the DIMD is not the smallest value in the rate-distortion cost set.

s16. Determine a target value in the correction value set corresponding to the smallest rate-distortion cost in the rate-distortion cost as the correction value configured for the derivation mode of the DIMD.

In the example shown in s12, assuming that the smallest rate-distortion cost in the rate-distortion cost set is the mode corresponding to the mode index 29, and the mode index 29 is obtained by pre-correcting the intra angular mode 20 using the last value 6 in the correction value set, the target value corresponding to the smallest rate-distortion cost is 6, and the value 6 may be determined as the correction value configured for the intra angular mode 20.

s17. Generate the correction indication information according to a determining result.

The correction indication information may be configured for indicating whether the DIMD result for the current block needs to be corrected. Further, if the DIMD result for the current block needs to be corrected, the correction indication information may further be configured for indicating the correction value configured for the correction.

In this embodiment, the encoding device determines whether the correction is required for the derivation mode according to a value of the rate-distortion cost of the derivation mode of the decoder-side intra mode derivation obtained before the pre-correction, and determines the target value in the correction value set corresponding to the smallest rate-distortion cost in the rate-distortion cost set as the correction value when the correction is required, so that the accuracy and the adaptability of the derivation mode of the DIMD can be ensured.

In an embodiment, a correction flag bit dimd_delta_flag may be introduced. In other words, the correction indication information may include the correction flag bit. The correction flag bit dimd_delta_flag is configured for indicating whether the DIMD result for the current block needs to be corrected. When the correction flag bit dimd_delta_flag is a first preset value (for example, 1), the DIMD result for the current block needs to be corrected; and when the correction flag bit dimd_delta_flag is a second preset value (for example, 0), the DIMD result for the current block does not need to be corrected.

In an embodiment, the correction flag bit may be set in a related syntactic element of the current block. The related syntactic element may include, but is not limited to, a high-level syntactic element and/or a common syntactic element. The high-level syntactic element may include, but is not limited to, the SPS, the PPS, the picture header, and the slice header. The common syntactic element means other syntactic elements than the high-level syntactic element, for example, a common syntactic element configured for storing some parameters of the current block. In an implementation, a correction flag bit may be set in a common syntactic element related to the current block. The correction flag bit in the common syntactic element related to the current block is configured for indicating whether the DIMD result for the current block needs to be corrected. When the correction flag bit in the common syntactic element related to the current block is the first preset value (for example, 1), the DIMD result for the current block needs to be corrected; and when the correction flag bit in the common syntactic element is the second preset value (for example, 0), the DIMD result for the current block does not need to be corrected.

In another embodiment, that the correction flag bit may be set in a high-level syntactic element related to the current block specifically includes any one of the following: (1) The correction flag bit may be set in the SPS referenced by the video sequence to which the current block belongs, to indicate whether all video frames in the video sequence allow correction; when the correction flag bit in the SPS is the first preset value (for example, 1), the DIMD results of all the video frames in the video sequence allow correction; and when the correction flag bit in the SPS is the second preset value (for example, 0), none of the DIMD results of all the video frames in the video sequence allows correction. (2) The correction flag bit may be set in the PPS referenced by the video frame to which the current block belongs, for indicating whether DIMD results of one or more video frames referencing the PPS allow correction; when the correction flag bit in the PPS is the first preset value (for example, 1), all the DIMD results of the one or more video frames referencing the PPS allow correction; and when the correction flag bit in the PPS is the second preset value (for example, 0), none of the DIMD results of the one or more video frames referencing the PPS allows correction. (3) The correction flag bit may be set in the picture header of the video frame to which the current block belongs, for indicating whether the video frame to which the current block belongs allows correction; when the correction flag bit in the picture header is the first preset value (for example, 1), the DIMD results of all CUs in the video frame to which the current block belongs allow correction; and when the correction flag bit in the picture header is the second preset value (for example, 0), none of the DIMD results of all the CUs in the video frame to which the current block belongs is not allowed to be corrected. (4) The correction flag bit may be set in the slice header of the slice to which the current block belongs, for indicating whether the slice to which the current block belongs allows correction; when the correction flag bit in the slice header is the first preset value (for example, 1), all DIMD results of all CUs in the slice to which the current block belongs allow correction; and when the correction flag bit in the slice header is the second preset value (for example, 0), none of the DIMD results of all the CUs in the slice to which the current block belongs allows correction.

In this embodiment, by setting the correction flag bit in the related syntactic element of the current block, it is marked whether the decoder-side intra mode derivation result for the current block needs to be corrected or not, so that whether correction is performed is quickly determined through the correction flag bit, improving codec processing efficiency.

In another embodiment, the correction flag bits may exist in different related syntactic elements at the same time, but the correction flag bits at different positions correspond to different priorities. Specifically, a priority of the correction flag bit in the high-level syntactic element is higher than a priority of the correction flag bit in the common syntactic element. Further, for the correction flag bit in the high-level syntactic element, a priority of the correction flag bit in the SPS is higher than a priority of the correction flag bit in the PPS; the priority of the correction flag bit in the PPS is higher than a priority of the correction flag bit in the picture header; and the priority of the correction flag bit in the picture header is higher than a priority of the correction flag bit in the slice header. When the correction flag bits exist in different related syntactic elements at the same time, it is necessary to check the correction flag bits of priorities sequentially in descending order of the priorities, to determine whether the current block needs to be corrected. In this case, generally, a correction flag bit of a high priority is configured for determining whether the correction is allowed, and a correction flag bit of a low priority is configured for determining whether the correction is required. For example, both the SPS and the PPS include the correction flag bit. When the correction flag bit in the SPS is the second preset value (for example, 0), none of the DIMD results of all the video frames in the video sequence allows correction. The encoding device does not check the correction flag bit in the PPS any more, and directly determines, according to the correction flag bit in the SPS, that none of the DIMD results of all the video frames in the video sequence needs to be corrected, that is, indicates that the current block does not need to be corrected. When the correction flag bit in the PPS is the first preset value (for example, 1), the DIMD results of all the video frames in the video sequence allow correction. The encoding device continues to check correction flag bits with lower priorities in descending order of the priorities, to determine whether the correction is required. That is, the encoding device continues to check the correction flag bit in the PPS; and when the correction flag bit in the PPS is the first preset value (for example, 1), all the DIMD results of the one or more video frames referencing the PPS allow correction. If there is no correction flag bit having a lower priority than that of the correction flag bit in the PPS, the encoding device determines, according to the correction flag bit in the PPS, that all the DIMD results of the one or more video frames referencing the PPS need to be corrected, that is, indicates that the DIMD result for the current block needs to be corrected. Certainly, if there is a correction flag bit having a lower priority than that of the correction flag bit in the PPS, the encoding device continues to perform checking in descending order of the priorities, and determines, according to a checking result, whether the current block needs to be corrected. When the correction flag bit in the PPS is the second preset value (for example, 0), none of the DIMD results of the one or more video frames referencing the PPS allows correction. Regardless of whether there is a correction flag bit having a lower priority than that of the correction flag bit in the PPS, the encoding device determines, according to the correction flag bit in the PPS, that none of the DIMD results of the one or more video frames referencing the PPS allows correction. Based on the above, in a case that the correction flag bit having a high priority indicates that correction is not allowed, the correction flag bit having a low priority is no longer checked, and the current block does not need to be corrected directly according to the correction flag bit having the high priority. In a case that the correction flag bit having a high priority indicates that the correction is allowed, the correction flag bits of all priorities need to be sequentially checked in descending order of the priorities, and whether the current block needs to be corrected is determined according to a checking result.

In an embodiment, the DIMD results may include two luminance derivation modes of the DIMD and one chrominance derivation mode of the DIMD. In a feasible implementation, one correction flag bit dimd_delta_flag may be used to collectively indicate whether the derivation modes of the DIMD need to be corrected. For example, when the correction flag bit dimd_delta_flag is the first preset value (for example, 1), all the derivation modes of the DIMD of the current block need to be corrected; and when the correction flag bit dimd_delta_flag is the second preset value (for example, 0), none of the derivation modes of the DIMD of the current block needs to be corrected.

In another feasible embodiment, each derivation mode of the DIMD may correspond to one correction flag bit, and whether the derivation modes of the DIMD need to be corrected is indicated by the correction flag bits respectively corresponding to the derivation modes. For example, a first luminance derivation mode of the DIMD $M_1$ corresponds to a correction flag bit dimd_delta_flag1. When the correction flag bit dimd_delta_flag1 is the first preset value (for example, 1), the first luminance derivation mode of the DIMD $M_1$ needs to be corrected; and when the correction flag bit dimd_delta_flag1 is the second preset value (for example, 0), the first luminance derivation mode of the DIMD $M_1$ does not need to be corrected. For another example, a second luminance derivation mode of the DIMD $M_2$ corresponds to a correction flag bit dimd_delta_flag2. When the correction flag bit dimd_delta_flag2 is the first preset value (for example, 1), the second luminance derivation mode of the DIMD $M_2$ needs to be corrected; and when the correction flag bit dimd_delta_flag2 is the second preset value (for example, 0), the second luminance derivation mode of the DIMD $M_2$ does not need to be corrected. For another example, the chrominance derivation mode of the DIMD may also correspond to a correction flag bit dimd_delta_flag3. When the correction flag bit dimd_delta_flag3 is the first preset value (for example, 1), the chrominance derivation mode of the DIMD needs to be corrected; and when the correction flag bit dimd_delta_flag3 is the second preset value (for example, 0), the chrominance derivation mode of the DIMD does not need to be corrected.

In another feasible implementation, if each DIMD derivation mode corresponds to a correction flag bit, indication manners of the correction flag bits may be the same or different. For example, the first luminance derivation mode of the DIMD $M_1$ corresponds to a correction flag bit dimd_delta_flag1, and the second luminance derivation mode of the DIMD $M_2$ corresponds to a correction flag bit dimd_delta_flag2. When the correction flag bit dimd_delta_flag1 is the first preset value (for example, 1), the first luminance derivation mode of the DIMD $M_1$ needs to be corrected. However, when the correction flag bit dimd_delta_flag2 is also the first preset value (for example, 1), the second luminance derivation mode of the DIMD $M_2$ does not need to be corrected. For another example, the first luminance derivation mode of the DIMD $M_1$ corresponds to a correction flag bit dimd_delta_flag1, and the chrominance derivation mode of the DIMD corresponds to a correction flag bit dimd_delta_flag3. When the correction flag bit dimd_delta_flag1 is the first preset value (for example, 1), the first luminance derivation mode of the DIMD $M_1$ needs to be corrected. However, only when the correction flag bit dimd_delta_flag3 is another preset value (for example, 5), the chrominance derivation mode of the DIMD needs to be corrected.

In another embodiment, if the DIMD result for the current block needs to be corrected, the correction indication information further includes correction parameter indication information. The correction parameter indication information is configured for indicating the correction value used in correcting the DIMD result for the current block. An implementation of the correction parameter indication information indicating the correction value may include, but is not limited to, any one or more of the following:

(1) A sign flag bit and an amplitude flag bit are used to jointly indicate the correction value.

In this implementation, a sign flag bit dimd_delta_sign may be introduced to indicate a sign of the correction value, that is, the correction parameter indication information includes the sign flag bit dimd_delta_sign. When the sign flag bit dimd_delta_sign is a first preset value (for example, 1), the sign of the correction value is a positive sign; and when the sign flag bit dimd_delta_sign is a second preset value (for example, 0), the sign of the correction value is a negative sign; or when the sign flag bit dimd_delta_sign is a first preset value (for example, 1), the sign of the correction value is a negative sign; and when the sign flag bit is the second preset value (for example, 0), the sign of the correction value is a positive sign.

The correction value set includes one or more values, a plurality of values having a same sign are set at different levels according to the amplitude values, and values having different signs need to be separately set in level. An example in which the correction value set is {-9, -6, -3, 3, 6, 9} is used. Values -9, -6, and -3 have the same sign (namely, the negative sign), and values 3, 6, and 9 have the same sign (namely, the positive sign). Therefore, the correction value set includes two types of levels, positive number levels and negative number levels. Values at the positive number level are 3, 6, and 9; and values at the negative number level are -3, -6, and -9. Assuming that the positive number levels are set in ascending order of the amplitude values, the correction value set includes three positive number levels in total, including a first positive number level being 3, a second positive number level being 6, and a third positive number level being 9. Similarly, assuming that the negative number levels are also set in ascending order of the amplitude values, the correction value set includes three negative number levels in total, including a first negative number level being -3, a second negative number level being -6, and a third negative number level being -9. The plurality of values having the same sign in the correction value set may be set in level in ascending order of the amplitude values, or may be set in level in descending order of the amplitude values; and different types of levels may have a same setting rule, or may have different setting rules. For example, in the above example, the positive number levels may be set in ascending order of the amplitude values, and the negative number levels may be set in descending order of the amplitude values. In addition, since the values in the correction value set may be flexibly set, the types of levels included in the correction value set are also flexible. For example, if the values included in the correction value set are all positive numbers, only the positive number levels are included in the correction value set. For another example, if the values included in the correction value set are all negative numbers, only the negative number levels are included in the correction value set. In addition, that differences between different levels of the same type of levels are the same (all the differences are 3) in the above example is merely an example, and the differences between different levels of the same type of levels in the correction value set may be different. For example, the correction value set is {3, 7, 9}, the first positive number level is 3, the second positive number level is 7, the third positive number level is 9, and the differences between the three levels may be different. There is no value 0 in the correction value set generally, because a correction effect cannot be achieved when the value 0 is used as the correction value. However, in a special case, if the correction value set includes the value 0, for example, the value 0 is specified in the high-level syntactic element as a value for correction, 0 may be flexibly classified into the positive number levels or the negative number levels.

As can be seen from the above description, in this embodiment, the correction parameter indication information further includes the amplitude flag bit. The amplitude flag bit is configured for indicating the amplitude value of the correction value. There may be two following possible implementations of the amplitude flag bit:

Implementation one: A level flag bit dimd_delta_level is introduced, that is, the amplitude flag bit may include the level flag bit dimd_delta_level. The level flag bit dimd_delta_level is configured for indicating the level of the amplitude value of the correction value in the correction value set.

An example in which the correction value set is {-9, -6, -3, 3, 6, 9} is used. The correction value set includes three positive number levels and three negative number levels according to the above description. The sign of the correction value is first determined based on the sign flag bit dimd_delta_sign, assuming that the correction value is determined to be a positive number. A specific positive number level of the correction value is determined according to the level flag bit dimd_delta_level. If the level flag bit dimd_delta_level is a third preset value (for example, 00), the amplitude value of the correction value is the first positive number level 3, and the correction value can be determined as the value 3. If the level flag bit dimd_delta_level is a fourth preset value (for example, 01), the correction value is determined as the second positive number level 6, the correction value is the value 6. If the level flag bit dimd_delta_level is a fifth preset value (for example, 10), the correction value is determined as the third positive number level 9, and the correction value is the value 9.

Implementation two: A plurality of level flag bits are introduced, that is, the amplitude flag bit may include a plurality of level flag bits. A level of the amplitude value of the correction value in the correction value set is indicated by the plurality of level flag bits.

In a possible implementation, a number of level flag bits may be equal to a number of corresponding types of levels in the correction value set. An example in which the correction value set is {-9, -6, -3, 3, 6, 9} is used. The correction value set includes three positive number levels and three negative number levels. The sign of the correction value is first determined based on the sign flag bit dimd_delta_sign, assuming that the correction value is determined to be a positive number. Three level flag bits may be used, respectively a first level flag bit dimd_delta_first_level, a second level flag bit dimd_delta_second_level, and a third level flag bit dimd_delta_third_level. Different level flag bits are configured for indicating whether the amplitude value of the correction value is at a corresponding level, as shown in this example, the first level flag bit dimd_delta_first_level is configured for indicating whether the amplitude value of the correction value is the first positive number level; the second level flag bit dimd_delta_second_level is configured for indicating whether the amplitude value of the correction value is the second positive number level; and the third level flag bit dimd_delta_third_level is configured for indicating whether the amplitude value of the correction value is the third positive number level.

If the first level flag bit dimd_delta_first_level is the first preset value (for example, 1), the amplitude value of the correction value is the first positive number level 3. In this case, the second level flag bit dimd_delta_second_level and the third level flag bit dimd_delta_third_level may not be enabled, or the second level flag bit dimd_delta_second_level and the third level flag bit dimd_delta_third_level are both set to the second preset value (for example, 0). If the first level flag bit dimd_delta_first_level is the second preset value (for example, 0), the amplitude value of the correction value is not the first positive number level, and the second level flag bit dimd_delta_second_level can still be used. If the second level flag bit dimd_delta_second_level is the first preset value (for example, 1), the amplitude value of the correction value is the second positive number level 6, and in this case, the third level flag bit dimd_delta_third_level may not be enabled, or the third level flag bit dimd_delta_third_level is set to the second preset value (for example, 0). If the second level flag bit dimd_delta_second_level is the second preset value (for example, 0), the amplitude value of the correction value is not the second positive number level, and the third level flag bit dimd_delta_third_level is still used, and so on.

In another possible implementation, the number of level flag bits may be less than the number of corresponding types of levels in the correction value set. The same level flag bit uses different values to indicate the level of the amplitude value of the correction value. An example in which the correction value set is {-9, -6, -3, 3, 6, 9} is still used. The correction value set includes three positive number levels and three negative number levels. The sign of the correction value is first determined based on the sign flag bit dimd_delta_sign, assuming that the correction value is determined to be a positive number. Only the first level flag bit dimd_delta_first_level and the second level flag bit dimd_delta_second_level may be introduced in this implementation. If the first level flag bit dimd_delta_first_level is the first preset value (for example, 1), the amplitude value of the correction value is the first positive number level 3. If the first level flag bit dimd_delta_first_level is the second preset value (for example, 0), the amplitude value of the correction value is not the first positive number level. The second level flag bit dimd_delta_second_level is further used. Different values of the second level flag bit dimd_delta_second_level are configured for indicating different levels at which the amplitude value of the correction value may be located. If the second level flag bit dimd_delta_second_level is the first preset value (for example, 1), the amplitude value of the correction value is the second positive number level 6. If the second level flag bit dimd_delta_second_level is the second preset value (for example, 0), the amplitude value of the correction value is the third positive number level 9.

In this embodiment, the correction value is jointly indicated by the sign flag bit and the amplitude flag bit, so that corresponding specific correction manners can be determined based on the sign flag bit and the amplitude flag bit, and the derivation accuracy and the adaptability of the DIMD can be improved, improving the codec performance.

(2) An index flag bit is used to indicate the correction value.

In this implementation, the index flag bit dimd_delta_index may be introduced. The correction parameter indication information includes the index flag bit dimd_delta_index. The index flag bit dimd_delta_index is configured for indicating an arrangement position of the correction value in the correction value set. The correction value set includes one or more values, and the values are sequentially arranged in the correction value set. An example in which the correction value set is {-9, -6, -3, 3, 6, 9} is used. The value -9 is arranged first in the correction value set, and a corresponding index may be 0. The value -6 is arranged second in the correction value set, and a corresponding index may be 1. By analogy, the value 6 is arranged sixth in the correction value set, and an index may be 5. In this way, different values of the index flag bit dimd_delta_index are configured for indicating different positions of the correction values in the correction value set. Assuming that the value of the index flag bit dimd_delta_index may be 000, 001, 010, 011, 100, 101, respectively representing that the indexes of the correction values are 0, 1, 2, 3, 4, and 5, to indicate different arrangement positions of the correction values in the correction value set. For example, when the index flag bit dimd_delta_index is 000, the index of the correction value is 0, that is, the correction value is the first value -9 in the correction value set. For another example, when the index flag bit dimd_delta_index is 001, the index of the correction value is 1, that is, the correction value is the second value -6 in the correction value set. For another example, when the index flag bit dimd_delta_index is 010, the index of the correction value is 2, that is, the correction value is the third value -3 in the correction value set, and so on.

In this embodiment, the correction value is indicated by the index flag bit, so that the corresponding correction value can be accurately determined by using the index flag bit, the accuracy of the correction value can be ensured, and the derivation accuracy and the adaptability of the DIMD can be improved based on the correction value, improving the codec performance.

The implementations of the correction parameter indication information indicating the correction value may be flexibly selected for use. As described above, the DIMD result may include two luminance derivation modes of the DIMD and one chrominance derivation mode of the DIMD. In a feasible implementation, the DIMD derivation modes may use the same correction value, or the DIMD derivation modes may use different correction values. For example, the first luminance derivation mode of the DIMD $M_1$ may use a correction value $M_{delta}$, the second luminance derivation mode of the DIMD $M_2$ may use a correction value $M_{delta}'$, and the chrominance derivation mode of the DIMD may use a correction value $M_{delta}''$. The three correction values may be the same or different. In another feasible implementation, indication manners of the three correction values may also be the same or different. For example, all the three correction values may be indicated by the index flag bit. For another example, the correction value $M_{delta}$ may be indicated by the sign flag bit and one level flag bit; the correction value $M_{delta}'$ may be indicated by the sign flag bit and a plurality of level flag bits; and the correction value $M_{delta}''$ may be indicated by the index flag bit. In addition, the correction value set used by the DIMD derivation modes may be the same or different. For example, the first luminance derivation mode of the DIMD $M_1$ may use a predefined value set as the correction value set, the second luminance derivation mode of the DIMD $M_2$ may use a value set constructed based on encoded or decoded information as the correction value set, and the chrominance derivation mode of the DIMD may use a value set defined by the high-level syntactic element as the correction value set.

As can be seen from the above description, the DIMD result for the current block may include the luminance derivation mode of the DIMD and the chrominance derivation mode of the DIMD. Therefore, in this embodiment of this application, correcting the DIMD result for the current block at the encoder side may include the following several possible cases: only the luminance derivation mode of the DIMD is corrected; or only the chrominance derivation mode of the DIMD is corrected; or both the luminance derivation mode of the DIMD and the chrominance derivation mode of the DIMD are corrected. The luminance derivation mode of the DIMD and the chrominance derivation mode of the DIMD allow correction using same or different correction values, and the luminance derivation mode of the DIMD and the chrominance derivation mode of the DIMD allow correction using same or different correction value sets.

In this embodiment, the correction for the luminance derivation mode and the chrominance derivation mode is flexibly configured, and the correction may be performed according to actual needs, to improve the derivation accuracy and the adaptability of the DIMD, to improve the codec performance.

Further, for the two luminance derivation modes, the first luminance derivation mode of the DIMD $M_1$ and the second luminance derivation mode of the DIMD, the correcting the DIMD result for the current block in this embodiment of this application may include the following several possible cases: only the first luminance derivation mode of the DIMD is corrected; or only the second luminance derivation mode of the DIMD is corrected; or both the first luminance derivation mode of the DIMD and the second luminance derivation mode of the DIMD are corrected. The first luminance derivation mode of the DIMD and the second luminance derivation mode of the DIMD allow correction using same or different correction values, and the first luminance derivation mode of the DIMD and the second luminance derivation mode of the DIMD allow correction using same or different correction value sets.

In this embodiment, when the plurality of luminance derivation modes are involved, the correction for each luminance derivation mode is flexibly configured, and the correction may be performed according to actual needs, to improve the derivation accuracy and the adaptability of DIMD, improving the codec performance. A correction process and relevant content related to the encoder side in this embodiment of this application are described in detail below.

After obtaining the correction indication information, the encoding device can correct the DIMD result for the current block according to the correction indication information. The correction herein is similar to the pre-correction process described above in that the correction value indicated in the correction indication information is applied based on the DIMD result. A difference from the pre-correction process is that the encoder side needs to perform pre-correction attempts sequentially on all values in the correction value set, but the encoder side can directly perform the correction based on the correction value determined in the correction indication information.

In an embodiment, the DIMD result for the current block includes a derivation mode of the DIMD. The derivation mode of the DIMD has the mode index. The encoding device performs operation S503. A procedure of the correcting the DIMD result for the current block according to the correction indication information may be specifically as follows: adjusting the mode index of the derivation mode of the DIMD using the correction value, to correct the derivation mode of the DIMD. For example, assuming that the derivation mode of the DIMD to be corrected is the intra angular mode 20 (namely, the intra angular mode with the mode index 20), and the correction value indicated in the correction indication information is 3, the correction value may be additionally applied based on the mode index of the intra angular mode 20 to the correction, that is, the correction process is 20 + 3 = 23. The correction process causes the derivation mode of the DIMD to change from the intra angular mode 20 before the correction to an intra angular mode 23, thereby performing optimal adjustments to the derivation mode of the DIMD in both direction and size. Moreover, the rate-distortion cost of the derivation mode of the DIMD is reduced through the correction, and the accuracy and the adaptability of the DIMD is improved.

In an embodiment, the derivation modes of the DIMD include two luminance derivation modes of the DIMD. Any one of the luminance derivation modes of the DIMD is represented as $M_i$, where i is a positive integer, and i is less than or equal to a total number (namely, 2) of the luminance derivation modes of the DIMD. If $M_i$ is the planar mode or another non-intra angular mode, the encoding device may alternatively map corrected $M_i$ to a special intra prediction mode. The special intra prediction mode includes, but is not limited to, any one of the following: the DC mode, the horizontal mode, the diagonal mode, the vertical mode, or the anti-diagonal mode. The anti-diagonal mode may further be divided into an anti-diagonal mode 1 and an anti-diagonal mode 2. The anti-diagonal mode 1 and the anti-diagonal mode 2 may correspond to different mode indexes.

In this embodiment, when the luminance derivation mode is the planar mode or another non-intra angular mode, the luminance derivation mode is corrected and mapped to an intra prediction mode in the DC mode, the horizontal mode, the diagonal mode, the vertical mode, or the anti-diagonal mode, so that the derivation accuracy and the adaptability of the DIMD can be improved, improving the codec performance.

In another embodiment, if the corrected $M_i$ does not belong to the intra angular mode set, the encoding device may alternatively map the corrected $M_i$ to any mode in the intra angular mode set. In an implementation, the intra angular mode set may be, for example, a set of 65 intra angles defined in the VVC standard corresponding to the mode indexes 2 to 66. In this embodiment, when the correction value configured for $M_i$ is a positive number, the mode index of a mapped mode of the corrected $M_i$ in the intra angular mode set may be determined using Formula 5.1 below:

$$((m_i - 1 + (M_{delta} - 1)) \% \ mod) + 2 \qquad \text{Formula 5.1}$$

When the correction value configured for $M_i$ is a negative number, the mode index of a mapped mode of the corrected $M_i$ in the intra angular mode set may be determined using Formula 5.2 below:

$$((m_i + \text{offset} - (M_{delta} - 1)) \% \ mod) + 2 \qquad \text{Formula 5.2}$$

In Formulas 5.1 and 5.2 above, $m_i$ is the mode index of $M_i$; $M_{delta}$ is the correction value configured for $M_i$; and offset = a maximum value of the mode index in the intra angular mode set -5. For example, assuming that the maximum value of the mode index in the intra angular mode set is 66, offset = 66 - 5 = 61; and mod = offset + 3. For example, in the above example, offset = 61, and mod = 61 + 3 = 64.

If the corrected $M_i$ is not an intra prediction mode defined in a video coding standard (such as the VVC standard), the corrected $M_i$ may be mapped to an intra prediction mode defined in the video coding standard through the mapping operations in the above two embodiments, which is more convenient for subsequent use. The luminance derivation mode not belonging to the intra angular mode set is corrected and mapped to the mode in the intra angular mode, so that luminance derivation may be performed by using the mode in the intra angular modes. The derivation accuracy and the adaptability of the DIMD can be improved, improving the codec performance.

In another embodiment, the corrected derivation mode of the DIMD needs to satisfy at least one of the following conditions:

Condition 1: The corrected derivation mode of the DIMD cannot include the derivation mode of the DIMD before the correction. This condition is to ensure a correction effect, avoiding invalid correction. This condition may include the following understanding: any corrected derivation mode of the DIMD obtained through correcting the derivation mode of the DIMD cannot be the same as the derivation mode of the DIMD before the correction, and cannot be the same as another derivation mode of the DIMD that is not corrected. For example, the corrected first luminance derivation mode of the DIMD $M_1$ cannot be the same mode as the first luminance derivation mode of the DIMD $M_1$ before the correction, cannot be the same mode as the second luminance derivation mode of the DIMD $M_2$, and cannot be the same mode as the chrominance derivation mode of the DIMD.

Condition 2: The corrected derivation modes of the DIMD cannot include the modes in the MPM mode set.

Condition 3: The corrected derivation modes of the DIMD cannot include modes in the non-MPM mode set.

Condition 2 and Condition 3 are to avoid conflicts between the corrected derivation mode of the DIMD and existing coding modes (namely, the modes in the MPM mode set or the modes in the non-MPM mode set) at the encoder side. If the corrected derivation mode of the DIMD includes the existing coding modes, that is, the derivation modes of the DIMD are the existing coding modes, the coding modes can be selected directly, so that the correction is insignificant. Setting of Condition 2 and Condition 3 can also ensure the correction effect, avoiding invalid correction.

Relevant content of predicting the intra prediction mode of the current block related to the encoder side in this embodiment of this application is described in detail below.

(1) A process of predicting the intra prediction mode for the luminance component of the current block.

As described above, the DIMD result for the current block includes the derivation mode of the DIMD. The derivation mode of the DIMD includes the first luminance derivation mode of the DIMD and the second luminance derivation mode of the DIMD. The encoding device performs operation S504. A procedure of the predicting the intra prediction mode of the current block based on the corrected DIMD result, to obtain the predicted value for the current block may specifically include any one of the following:

(1) The intra prediction mode of the current block is predicted using a corrected first luminance derivation mode of the DIMD, and a predicted value of the corrected first luminance derivation mode of the DIMD is determined as a predicted value of a luminance component of the current block.

(2) The intra prediction mode of the current block is predicted using a corrected second luminance derivation mode of the DIMD, and a predicted value of the corrected second luminance derivation mode of the DIMD is determined as the predicted value of the luminance component of the current block.

(3) The intra prediction mode of the current block respectively is predicted using a corrected first luminance derivation mode of the DIMD and a planar mode, and weighted fusion is performed on a predicted value of the corrected first luminance derivation mode of the DIMD and a predicted value of the planar mode, to obtain the predicted value of the luminance component of the current block.

(4) The intra prediction mode of the current block is predicted respectively using a corrected second luminance derivation mode of the DIMD and the planar mode, and weighted fusion is performed on a predicted value of the corrected second luminance derivation mode of the DIMD and the predicted value of the planar mode, to obtain the predicted value of the luminance component of the current block.

(5) The intra prediction mode of the current block is predicted respectively using a corrected first luminance derivation mode of the DIMD and a corrected second luminance derivation mode of the DIMD, and weighted fusion is performed on the predicted value of the corrected first luminance derivation mode of the DIMD and the predicted value of the corrected second luminance derivation mode of the DIMD, to obtain the predicted value of the luminance component of the current block.

(6) The intra prediction mode of the current block is predicted respectively using a corrected first luminance derivation mode of the DIMD, a second luminance derivation mode of the DIMD, and the planar mode, and weighted fusion is performed on the predicted value of the corrected first luminance derivation mode of the DIMD, the predicted value of the second luminance derivation mode of the DIMD, and the predicted value of the planar mode, to obtain the predicted value of the luminance component of the current block.

(7) The intra prediction mode of the current block is predicted respectively using a first luminance derivation mode of the DIMD, a corrected second luminance derivation mode of the DIMD, and the planar mode, and weighted fusion is performed on the predicted value of the first luminance derivation mode of the DIMD, the predicted value of the corrected second luminance derivation mode of the DIMD, and the predicted value of the planar mode, to obtain the predicted value of the luminance component of the current block.

(8) The intra prediction mode of the current block is predicted respectively using a corrected first luminance derivation mode of the DIMD, a corrected second luminance derivation mode of the DIMD, and the planar mode, and weighted fusion is performed on the predicted value of the corrected first luminance derivation mode of the DIMD, the predicted value of the corrected second luminance derivation mode of the DIMD, and the predicted value of the planar mode, to obtain the predicted value of the luminance component of the current block.

In the weighted fusion involved in (3) to (8), weights used in the modes may be flexibly set according to actual needs, which is not limited in this embodiment of this application. For example, in the weighted fusion in (3), the weight of the corrected first DIMD luminance derivation mode $M_1$ may be 43/64, and the weight of the planar mode may be 21/64. The weights in this example are merely exemplary, and other weights may be used. For another example, in the weighted fusion in (8), the weight of the planar mode may be 21/64, and the remaining weight 43/64 may be allocated, referring to Formula 4.1 and Formula 4.2, to the corrected first luminance derivation mode of the DIMD $M_1$ and the corrected second luminance derivation mode of the DIMD $M_2$. The weights in this example are also merely exemplary, and other weights may be used. Various corrected luminance derivation modes are predicted, the derivation accuracy and the adaptability of the DIMD are improved, and the predicted value for the current block with high accuracy can be obtained, so that the codec performance is improved.

(2) A process of predicting the intra prediction mode for the chrominance component of the current block.

The DIMD result for the current block includes the derivation mode of the DIMD. The derivation mode of the DIMD includes the chrominance derivation mode of the DIMD. The encoding device performs operation S504. A procedure of the predicting the intra prediction mode of the current block based on the corrected DIMD result, to obtain the predicted value for the current block may specifically include any one of the following:

(1) In a case that any one or more of the luminance derivation modes of the DIMD have been corrected, the chrominance derivation mode of the DIMD may not be corrected. The intra prediction mode of the current block may be predicted using the chrominance derivation mode of the DIMD that is not corrected, and the predicted value of the chrominance derivation mode of the DIMD is directly determined as the predicted value of the chrominance component of the current block.

(2) In a case that the chrominance derivation mode of the DIMD has been corrected, the intra prediction mode of the current block may be predicted using the corrected chrominance derivation mode of the DIMD, and the predicted value of the corrected chrominance derivation mode of the DIMD is determined as the predicted value of the chrominance component of the current block. The intra prediction mode of the current block is predicted by using the chrominance derivation mode, so that the derivation accuracy and the adaptability of the DIMD can be improved, the predicted value for the current block with high accuracy can be obtained, and the codec performance is improved.

Based on the description in the above embodiment, after performing DIMD processing on the current block in the video to obtain the DIMD result, the encoder side may generate the correction indication information based on the DIMD result, and correct the DIMD result for the current block according to the correction indication information. Derivation accuracy and adaptability of the DIMD can be improved through the correction. The intra prediction mode of the current block is predicted based on the corrected DIMD result. In this way, the predicted value with high accuracy of the current block can be obtained, achieving better restoration of a reconstructed decoded image corresponding to the current block, so that the encoding performance is improved. In addition, the encoder side transmits the correction indication information through the video bitstream to the decoder side, to indicate that the decoder side can perform the same correction processing on the DIMD result, improving the decoding performance.

The video processing method provided in the embodiments of this application is described from the decoder side in detail below.

FIG. 6 is a schematic flowchart of a video processing method according to another exemplary embodiment of this application. The video processing method may be performed by the decoding device in the foregoing video processing system. In other words, the embodiment shown in FIG. 6 may be a procedure of the video processing method at the decoder side. The video processing method may include the following operations S601 to S603:

S601. Perform DIMD processing on a current block in a video bitstream, to obtain a DIMD result for the current block. The video bitstream includes correction indication information for the DIMD of the current block. The current block is a coding unit in the video bitstream for decoding processing.

S602. Correct the DIMD result for the current block according to the correction indication information.

S603. Predict an intra prediction mode of the current block based on a corrected DIMD result, to obtain a predicted value for the current block, the predicted value for the current block being configured for reconstructing a decoded image corresponding to the current block.

As can be seen from the related descriptions of the embodiment shown in FIG. 5, the correction indication information may be directly encoded into the video bitstream by the encoding device. After receiving the video bitstream transmitted by the encoding device, the decoding device may obtain the correction indication information for the DIMD of the current block from the video bitstream, correct the DIMD result for the current block according to the correction indication information, and predict the intra prediction mode of the current block based on the corrected DIMD result, to obtain the predicted value for the current block. The decoding device may reconstruct the decoded image corresponding to the current block using the predicted value for the current block, thereby restoring reconstructed YUV of the current block.

In this embodiment of this application, the encoder side transmits the correction indication information to the decoder side through the video bitstream, and the decoder side can correct the DIMD result according to the correction indication information. The derivation accuracy and the adaptability of the DIMD can be improved through the correction. The intra prediction mode of the current block is predicted based on the corrected DIMD result. In this way, the predicted value with high accuracy of the current block can be obtained, achieving better restoration of a reconstructed decoded image corresponding to the current block. In this embodiment of this application, the encoder side and the decoder side do not only perform the same DIMD process, but also perform the same correction on the DIMD result according to the same correction indication information. The derivation accuracy and the adaptability of the DIMD can be improved through the correction at both the encoder side and the decoder side, so that the codec performance is improved.

Relevant content of the correction indication information related to the decoder side of this embodiment of this application is described in detail below.

In an embodiment, the correction indication information may include a correction flag bit. The correction flag bit is configured for indicating whether the DIMD result for the current block needs to be corrected. When the correction flag bit is a first preset value (for example, 1), the DIMD result for the current block needs to be corrected; and when the correction flag bit is a second preset value (for example, 0), the DIMD result for the current block does not need to be corrected.

In another embodiment, if the DIMD result for the current block needs to be corrected, the correction indication information further includes correction parameter indication information. The correction parameter indication information is configured for indicating the correction value used in correcting the DIMD result for the current block. The correction value belongs to a correction value set, and the correction value set includes any one or more of the following: a predefined value set; a value set that allows dynamic adjustment in a codec process; a value set constructed based on encoded or decoded information; or a value set defined by a high-level syntactic element.

In a feasible implementation, the correction parameter indication information may include a sign flag bit and an amplitude flag bit. The sign flag bit is configured for indicating a sign of the correction value. The amplitude flag bit is configured for indicating the amplitude value of the correction value.

The sign of the correction value is a positive sign when the sign flag bit is the first preset value, and the sign of the correction value is a negative sign when the sign flag bit is the second preset value; or the sign of the correction value is a negative sign when the sign flag bit is the first preset value, and the sign of the correction value is a positive sign when the sign flag bit is the second preset value. The correction value set includes one or more values, a plurality of values having a same sign being set at different levels according to amplitude values; and the amplitude flag bit includes one or more level flag bits, the level flag bit being configured for indicating a level of the amplitude value of the correction value in the correction value set.

In another feasible implementation, the correction value set includes one or more values, and the one or more values are sequentially arranged in the correction value set. The correction parameter indication information includes an index flag bit, the index flag bit being configured for indicating an arrangement position of the correction value in the correction value set.

Similar to the encoder side, the DIMD result for the current block may include a luminance derivation mode of the DIMD and a chrominance derivation mode of the DIMD. Therefore, in this embodiment of this application, correcting the DIMD result for the current block at the decoder side may include the following several possible cases: only the luminance derivation mode of the DIMD is corrected; or only the chrominance derivation mode of the DIMD is corrected; or both the luminance derivation mode of the DIMD and the chrominance derivation mode of the DIMD are corrected. The luminance derivation mode of the DIMD and the chrominance derivation mode of the DIMD allow correction using same or different correction values, and the luminance derivation mode of the DIMD and the chrominance derivation mode of the DIMD allow correction using same or different correction value sets. Further, for the two luminance derivation modes, the first luminance derivation mode of the DIMD $M_1$ and the second luminance derivation mode of the DIMD, the correcting the DIMD result for the current block in this embodiment of this application may include the following several possible cases: only the first luminance derivation mode of the DIMD is corrected; or only the second luminance derivation mode of the DIMD is corrected; or both the first luminance derivation mode of the DIMD and the second luminance derivation mode of the DIMD are corrected. The first luminance derivation mode of the DIMD and the second luminance derivation mode of the DIMD allow correction using same or different correction values, and the first luminance derivation mode of the DIMD and the second luminance derivation mode of the DIMD allow correction using same or different correction value sets.

In this embodiment of this application, the relevant contents of the decoder side and the encoder side related to the correction indication information are consistent. Therefore, for the relevant contents of the decoder side related to the correction indication information, reference may be made to the above description of the relevant contents of the encoder side related to the correction indication information. Details are not described herein.

A correction process and relevant content related to the decoder side in this embodiment of this application are described in detail below.

After obtaining the correction indication information, the decoding device can correct the DIMD result for the current block according to the correction indication information. In an embodiment, the DIMD result for the current block includes a derivation mode of the DIMD. The derivation mode of the DIMD has the mode index. The decoding device performs operation S602. The correcting the DIMD result for the current block according to the correction indication information may include: adjusting the mode index of the derivation mode of the DIMD using the correction value, to correct the derivation mode of the DIMD.

In an embodiment, the derivation modes of the DIMD include two luminance derivation modes of the DIMD. Any one of the luminance derivation modes of the DIMD is represented as $M_i$, where i is a positive integer, and i is less than or equal to a total number of the luminance derivation modes of the DIMD. If $M_i$ is the planar mode or another non-intra angular mode, the decoding device may alternatively map corrected $M_i$ to a special intra prediction mode. The special intra prediction mode includes any one of the following: the DC mode, the horizontal mode, the diagonal mode, the vertical mode, an anti-diagonal mode 1, an anti-diagonal mode 2.

In another embodiment, if the corrected $M_i$ does not belong to the intra angular mode set, the decoding device may alternatively map the corrected $M_i$ to any mode in the intra angular mode set. In an implementation, when the correction value configured for $M_i$ is a positive number, the mode index of a mapped mode of the corrected $M_i$ in the intra angular mode set may be determined using Formula 5.1. When the correction value configured for $M_i$ is a negative number, the mode index of a mapped mode of the corrected $M_i$ in the intra angular mode set may be determined using Formula 5.2: In another embodiment, the corrected derivation mode of the DIMD satisfies at least one of the following conditions: the corrected derivation mode of the DIMD cannot include the derivation mode of the DIMD before the correction; the corrected derivation modes of the DIMD cannot include the modes in the MPM mode set; or the corrected derivation modes of the DIMD cannot include modes in the non-MPM mode set.

In this embodiment of this application, the correction processes performed by the decoder side and the encoder side are consistent. Therefore, for the correction process and relevant contents of the decoder side, reference may be made to the description of the correction process and relevant contents of the encoder side. Details are not described herein.

Relevant content of predicting the intra prediction mode of the current block related to the decoder side in this embodiment of this application is described in detail below.

(1) A process of predicting the intra prediction mode for the luminance component of the current block.

As described above, the DIMD result for the current block includes the derivation mode of the DIMD. The derivation mode of the DIMD includes the first luminance derivation mode of the DIMD and the second luminance derivation mode of the DIMD. The decoding device performs operation S603. A procedure of the predicting the intra prediction mode of the current block based on the corrected DIMD result, to obtain the predicted value for the current block may specifically include any one of the following:

(1) The intra prediction mode of the current block is predicted using a corrected first luminance derivation mode of the DIMD, and a predicted value of the corrected first luminance derivation mode of the DIMD is determined as a predicted value of a luminance component of the current block.

(2) The intra prediction mode of the current block is predicted using a corrected second luminance derivation mode of the DIMD, and a predicted value of the corrected second luminance derivation mode of the DIMD is determined as the predicted value of the luminance component of the current block.

(3) The intra prediction mode of the current block respectively is predicted using a corrected first luminance derivation mode of the DIMD and a planar mode, and weighted fusion is performed on a predicted value of the corrected first luminance derivation mode of the DIMD and a predicted value of the planar mode, to obtain the predicted value of the luminance component of the current block.

(4) The intra prediction mode of the current block is predicted respectively using a corrected second luminance derivation mode of the DIMD and the planar mode, and weighted fusion is performed on a predicted value of the corrected second luminance derivation mode of the DIMD and the predicted value of the planar mode, to obtain the predicted value of the luminance component of the current block.

(5) The intra prediction mode of the current block is predicted respectively using a corrected first luminance derivation mode of the DIMD and a corrected second luminance derivation mode of the DIMD, and weighted fusion is performed on the predicted value of the corrected first luminance derivation mode of the DIMD and the predicted value of the corrected second luminance derivation mode of the DIMD, to obtain the predicted value of the luminance component of the current block.

(6) The intra prediction mode of the current block is predicted respectively using a corrected first luminance derivation mode of the DIMD, a second luminance derivation mode of the DIMD, and the planar mode, and weighted fusion is performed on the predicted value of the corrected first luminance derivation mode of the DIMD, the predicted value of the second luminance derivation mode of the DIMD, and the predicted value of the planar mode, to obtain the predicted value of the luminance component of the current block.

(7) The intra prediction mode of the current block is predicted respectively using a first luminance derivation mode of the DIMD, a corrected second luminance derivation mode of the DIMD, and the planar mode, and weighted fusion is performed on the predicted value of the first luminance derivation mode of the DIMD, the predicted value of the corrected second luminance derivation mode of the DIMD, and the predicted value of the planar mode, to obtain the predicted value of the luminance component of the current block.

(8) The intra prediction mode of the current block is predicted respectively using a corrected first luminance derivation mode of the DIMD, a corrected second luminance derivation mode of the DIMD, and the planar mode, and weighted fusion is performed on the predicted value of the corrected first luminance derivation mode of the DIMD, the predicted value of the corrected second luminance derivation mode of the DIMD, and the predicted value of the planar mode, to obtain the predicted value of the luminance component of the current block.

(2) A process of predicting the intra prediction mode for the chrominance component of the current block.

The DIMD result for the current block includes the derivation mode of the DIMD. The derivation mode of the DIMD includes the chrominance derivation mode of the DIMD. The decoding device performs operation S603. A procedure of the predicting the intra prediction mode of the current block based on the corrected DIMD result, to obtain the predicted value for the current block may specifically include any one of the following:

(1) In a case that any one or more of the luminance derivation modes of the DIMD have been corrected, the chrominance derivation mode of the DIMD may not be corrected. The intra prediction mode of the current block may be predicted using the chrominance derivation mode of the DIMD that is not corrected, and the predicted value of the chrominance derivation mode of the DIMD is directly determined as the predicted value of the chrominance component of the current block.

(2) In a case that the chrominance derivation mode of the DIMD has been corrected, the intra prediction mode of the current block may be predicted using the corrected chrominance derivation mode of the DIMD, and the predicted value of the corrected chrominance derivation mode of the DIMD is determined as the predicted value of the chrominance component of the current block.

In this embodiment of this application, the intra prediction processes performed by the decoder side and the encoder side are also consistent. Therefore, for the prediction process for the intra prediction mode of the current block by the decoder side, reference may be made to the prediction process for the intra prediction mode of the current block by the encoder side. Details are not described herein.

Based on description in the above embodiment, the encoder side transmits the correction indication information to the decoder side through the video bitstream, and the decoder side can correct the DIMD result according to the correction indication information. The derivation accuracy and the adaptability of the DIMD can be improved through the correction. The intra prediction mode of the current block is predicted based on the corrected DIMD result. In this way, the predicted value with high accuracy of the current block can be obtained, achieving better restoration of a reconstructed decoded image corresponding to the current block. In this embodiment of this application, the encoder side and the decoder side do not only perform the same DIMD process, but also perform the same correction on the DIMD result according to the same correction indication information. The derivation accuracy and the adaptability of the DIMD can be improved through the correction at both the encoder side and the decoder side, so that the codec performance is improved.

A video processing apparatus provided in an embodiment of this application is described in detail below.

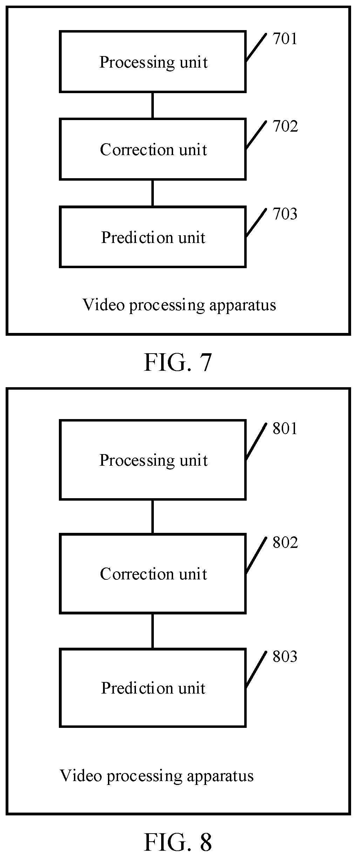

FIG. 7 is a schematic structural diagram of a video processing apparatus according to an exemplary embodiment of this application. The video processing apparatus may be arranged in a computer device provided in an embodiment of this application. The computer device may be the encoding device described in the method embodiments. The video processing apparatus shown in FIG. 7 may be a computer-readable instruction (including program code) executed in the computer device. The video processing apparatus may be configured to perform some or all of the operations in the method embodiment shown in FIG. 5. Referring to FIG. 7, the video processing apparatus may include the following units:

a processing unit 701, configured to perform DIMD processing on a current block of a video, to obtain a DIMD result for the current block, the current block being a coding unit in the video bitstream for encoding processing; and

the processing unit 701 being further configured to generate correction indication information for the DIMD of the current block according to the DIMD result for the current block;

a correction unit 702, configured to correct the DIMD result for the current block according to the correction indication information; and

a prediction unit 703, configured to predict an intra prediction mode of the current block based on a corrected DIMD result, to obtain a predicted value for the current block, the predicted value for the current block being configured for reconstructing a decoded image corresponding to the current block; and

the processing unit 701 being further configured to encode the video based on the correction indication information and the predicted value for the current block, to generate a video bitstream.

In an embodiment, the DIMD result for the current block includes a derivation mode of the DIMD. The processing unit 701 is specifically configured to: obtain a correction value set, the correction value set including one or more values; pre-correct the derivation mode of the DIMD using the values in the correction value set; obtain a rate-distortion cost set, the rate-distortion cost set including a rate-distortion cost of the derivation mode of the DIMD obtained before the pre-correction and a rate-distortion cost of the derivation mode of the DIMD obtained after the pre-correction performed using the values in the correction value set; generate the correction indication information indicating that the derivation mode of the DIMD does not need to be corrected, if the rate-distortion cost of the derivation mode of the DIMD obtained before the pre-correction is a smallest value in the rate-distortion cost set; and generate the correction indication information determining that the derivation mode of the DIMD needs to be corrected and including a correction value if the rate-distortion cost of the derivation mode of the DIMD obtained before pre-correction is not the smallest value in the rate-distortion cost set. The correction value is a target value in the correction value set corresponding to a smallest rate-distortion cost in the rate-distortion cost set.

In an embodiment, the correction indication information includes a correction flag bit. The correction flag bit is configured for indicating whether the DIMD result for the current block needs to be corrected. When the correction flag bit is a first preset value, the DIMD result for the current block needs to be corrected; and when the correction flag bit is a second preset value, the DIMD result for the current block does not need to be corrected. The correction flag bit is set in a related syntactic element of the current block.

In an embodiment, if the DIMD result for the current block needs to be corrected, the correction indication information further includes correction parameter indication information. The correction parameter indication information is configured for indicating the correction value used in correcting the DIMD result for the current block. The correction value belongs to a correction value set, and the correction value set includes any one or more of the following: a predefined value set; a value set that allows dynamic adjustment in a codec process; a value set constructed based on encoded or decoded information; or a value set defined by a high-level syntactic element.

In an embodiment, the correction parameter indication information includes a sign flag bit and an amplitude flag bit. The sign flag bit is configured for indicating a sign of the correction value. The amplitude flag bit is configured for indicating the amplitude value of the correction value. The sign of the correction value is a positive sign when the sign flag bit is the first preset value, and the sign of the correction value is a negative sign when the sign flag bit is the second preset value; or the sign of the correction value is a negative sign when the sign flag bit is the first preset value; and the sign of the correction value is a positive sign when the sign flag bit is the second preset value. The correction value set includes one or more values, a plurality of values having a same sign being set at different levels according to amplitude values; and the amplitude flag bit includes one or more level flag bits, the level flag bit being configured for indicating a level of the amplitude value of the correction value in the correction value set.

In an embodiment, the correction value set includes one or more values. The one or more values are sequentially arranged in the correction value set. The correction parameter indication information includes an index flag bit, the index flag bit being configured for indicating an arrangement position of the correction value in the correction value set.

In an embodiment, the DIMD result for the current block includes a derivation mode of the DIMD. The derivation mode of the DIMD has the mode index. The correction unit 702 is specifically configured to: adjust the mode index of the derivation mode of the DIMD using the correction value, to correct the derivation mode of the DIMD.

In an embodiment, the derivation modes of the DIMD include two luminance derivation modes of the DIMD. Any one of the luminance derivation modes of the DIMD is represented as $M_i$, where i is a positive integer, and i is less than or equal to a total number of the luminance derivation modes of the DIMD. The correction unit 702 is further configured to: map a corrected $M_i$ to a special intra prediction mode if $M_i$ is a planar mode or another non-intra angular mode. The special intra prediction mode includes any one of the following: a direct current mode, a horizontal mode, a diagonal mode, a vertical mode, or an anti-diagonal mode.

In an embodiment, the derivation modes of the DIMD include two luminance derivation modes of the DIMD. Any one of the luminance derivation modes of the DIMD is represented as $M_i$, where i is a positive integer, and i is less than or equal to a total number of the luminance derivation modes of the DIMD. The correction unit 702 is further configured to: map a corrected $M_i$ to any mode in the intra angular mode set if the corrected $M_i$ does not belong to an intra angular mode set. When the correction value configured for $M_i$ is a positive number, the mode index of a mapped mode of the corrected $M_i$ in the intra angular mode set is determined using Formula 5.1. When the correction value configured for $M_i$ is a negative number, the mode index of a mapped mode of the corrected $M_i$ in the intra angular mode set is determined using Formula 5.2.

In an embodiment, the corrected derivation mode of the DIMD satisfies at least one of the following conditions: the corrected derivation mode of the DIMD does not include the derivation mode of the DIMD before the correction; the corrected derivation modes of the DIMD does not include the modes in the MPM mode set; and the corrected derivation modes of the DIMD does not include modes in the non-MPM mode set.

In an embodiment, the DIMD result for the current block includes the derivation mode of the DIMD. The derivation mode of the DIMD includes the luminance derivation mode of the DIMD and the chrominance derivation mode of the DIMD. The correction unit 702 is specifically configured to: correct the luminance derivation mode of the DIMD; or correct the chrominance derivation mode of the DIMD; or correct both the luminance derivation mode of the DIMD and the chrominance derivation mode of the DIMD. The luminance derivation mode of the DIMD and the chrominance derivation mode of the DIMD allow correction using same or different correction values, and the luminance derivation mode of the DIMD and the chrominance derivation mode of the DIMD allow correction using same or different correction value sets.

In an embodiment, the DIMD result for the current block includes the derivation mode of the DIMD. The derivation mode of the DIMD includes the first luminance derivation mode of the DIMD and the second luminance derivation mode of the DIMD. The correction unit 702 is specifically configured to: correct the first luminance derivation mode of the DIMD; or correct the second luminance derivation mode of the DIMD; or correct both the first luminance derivation mode of the DIMD and the second luminance derivation mode of the DIMD. The first luminance derivation mode of the DIMD and the second luminance derivation mode of the DIMD allow correction using same or different correction values, and the first luminance derivation mode of the DIMD and the second luminance derivation mode of the DIMD allow correction using same or different correction value sets.

In an embodiment, the DIMD result for the current block includes the derivation mode of the DIMD. The derivation mode of the DIMD includes the first luminance derivation mode of the DIMD and the second luminance derivation mode of the DIMD. The prediction unit 703 is specifically configured to: predict the intra prediction mode of the current block using a corrected first luminance derivation mode of the DIMD, and determine a predicted value of the corrected first luminance derivation mode of the DIMD as a predicted value of a luminance component of the current block; or predict the intra prediction mode of the current block using a corrected second luminance derivation mode of the DIMD, and determine a predicted value of the corrected second luminance derivation mode of the DIMD as the predicted value of the luminance component of the current block; or predict the intra prediction mode of the current block respectively using a corrected first luminance derivation mode of the DIMD and a planar mode, and perform weighted fusion on a predicted value of the corrected first luminance derivation mode of the DIMD and a predicted value of the planar mode, to obtain the predicted value of the luminance component of the current block; or predict the intra prediction mode of the current block respectively using a corrected second luminance derivation mode of the DIMD and the planar mode, and perform weighted fusion on a predicted value of the corrected second luminance derivation mode of the DIMD and the predicted value of the planar mode, to obtain the predicted value of the luminance component of the current block; or predict the intra prediction mode of the current block respectively using a corrected first luminance derivation mode of the DIMD and a corrected second luminance derivation mode of the DIMD, and perform weighted fusion on the predicted value of the corrected first luminance derivation mode of the DIMD and the predicted value of the corrected second luminance derivation mode of the DIMD, to obtain the predicted value of the luminance component of the current block; or predict the intra prediction mode of the current block respectively using a corrected first luminance derivation mode of the DIMD, a second luminance derivation mode of the DIMD, and the planar mode, and perform weighted fusion on the predicted value of the corrected first luminance derivation mode of the DIMD, the predicted value of the second luminance derivation mode of the DIMD, and the predicted value of the planar mode, to obtain the predicted value of the luminance component of the current block; or predict the intra prediction mode of the current block respectively using a first luminance derivation mode of the DIMD, a corrected second luminance derivation mode of the DIMD, and the planar mode, and perform weighted fusion on the predicted value of the first luminance derivation mode of the DIMD, the predicted value of the corrected second luminance derivation mode of the DIMD, and the predicted value of the planar mode, to obtain the predicted value of the luminance component of the current block; or predict the intra prediction mode of the current block respectively using a corrected first luminance derivation mode of the DIMD, a corrected second luminance derivation mode of the DIMD, and the planar mode, and perform weighted fusion on the predicted value of the corrected first luminance derivation mode of the DIMD, the predicted value of the corrected second luminance derivation mode of the DIMD, and the predicted value of the planar mode, to obtain the predicted value of the luminance component of the current block.

In an embodiment, the DIMD result for the current block includes the derivation mode of the DIMD. The derivation mode of the DIMD includes the chrominance derivation mode of the DIMD. The prediction unit 703 is specifically configured to: predict the intra prediction mode of the current block using the corrected chrominance derivation mode of the DIMD, and determine a predicted value of the corrected chrominance derivation mode of the DIMD as a predicted value of a chrominance component of the current block.

FIG. 8 is a schematic structural diagram of a video processing apparatus according to another exemplary embodiment of this application. The video processing apparatus may be arranged in a computer device provided in an embodiment of this application. The computer device may be the decoding device described in the method embodiments. The video processing apparatus shown in FIG. 8 may be a computer-readable instruction (including program code) executed in the computer device. The video processing apparatus may be configured to perform some or all of the operations in the method embodiment shown in FIG. 6. Referring to FIG. 8, the video processing apparatus may include the following units:

a processing unit 801, configured to perform DIMD processing on a current block in a video bitstream, to obtain a DIMD result for the current block, the video bitstream including correction indication information for the DIMD of the current block; and the current block being a coding unit in the video bitstream for decoding processing;

a correction unit 802, configured to correct the DIMD result for the current block according to the correction indication information; and

a prediction unit 803, configured to predict an intra prediction mode of the current block based on a corrected DIMD result, to obtain a predicted value for the current block, the predicted value for the current block being configured for reconstructing a decoded image corresponding to the current block.

In an embodiment, the correction indication information includes a correction flag bit. The correction flag bit is configured for indicating whether the DIMD result for the current block needs to be corrected. When the correction flag bit is a first preset value, the DIMD result for the current block needs to be corrected; and when the correction flag bit is a second preset value, the DIMD result for the current block does not need to be corrected. The correction flag bit is set in a related syntactic element of the current block.

In an embodiment, if the DIMD result for the current block needs to be corrected, the correction indication information further includes correction parameter indication information. The correction parameter indication information is configured for indicating the correction value used in correcting the DIMD result for the current block. The correction value belongs to a correction value set, and the correction value set includes any one or more of the following: a predefined value set; a value set that allows dynamic adjustment in a codec process; a value set constructed based on encoded or decoded information; or a value set defined by a high-level syntactic element.

In an embodiment, the correction parameter indication information includes a sign flag bit and an amplitude flag bit. The sign flag bit is configured for indicating a sign of the correction value. The amplitude flag bit is configured for indicating the amplitude value of the correction value. The sign of the correction value is a positive sign when the sign flag bit is the first preset value, and the sign of the correction value is a negative sign when the sign flag bit is the second preset value; or the sign of the correction value is a negative sign when the sign flag bit is the first preset value; and the sign of the correction value is a positive sign when the sign flag bit is the second preset value. The correction value set includes one or more values, a plurality of values having a same sign being set at different levels according to amplitude values; and the amplitude flag bit includes one or more level flag bits, the level flag bit being configured for indicating a level of the amplitude value of the correction value in the correction value set.

In an embodiment, the correction value set includes one or more values. The one or more values are sequentially arranged in the correction value set. The correction parameter indication information includes an index flag bit, the index flag bit being configured for indicating an arrangement position of the correction value in the correction value set.

In an embodiment, the DIMD result for the current block includes a derivation mode of the DIMD. The derivation mode of the DIMD has the mode index. The correction unit 802 is specifically configured to: adjust the mode index of the derivation mode of the DIMD using the correction value, to correct the derivation mode of the DIMD.

In an embodiment, the derivation modes of the DIMD include two luminance derivation modes of the DIMD. Any one of the luminance derivation modes of the DIMD is represented as $M_i$, where i is a positive integer, and i is less than or equal to a total number of the luminance derivation modes of the DIMD. The correction unit 802 is further configured to: map a corrected $M_i$ to a special intra prediction mode if $M_i$ is a planar mode or another non-intra angular mode. The special intra prediction mode includes any one of the following: a direct current mode, a horizontal mode, a diagonal mode, a vertical mode, or an anti-diagonal mode.

In an embodiment, the derivation modes of the DIMD include two luminance derivation modes of the DIMD. Any one of the luminance derivation modes of the DIMD is represented as $M_i$, where i is a positive integer, and i is less than or equal to a total number of the luminance derivation modes of the DIMD. The correction unit 802 is further configured to: map a corrected $M_i$ to any mode in the intra angular mode set if the corrected $M_i$ does not belong to an intra angular mode set. When the correction value configured for $M_i$ is a positive number, the mode index of a mapped mode of the corrected $M_i$ in the intra angular mode set is determined using Formula 5.1. When the correction value configured for $M_i$ is a negative number, the mode index of a mapped mode of the corrected $M_i$ in the intra angular mode set is determined using Formula 5.2.

In an embodiment, the corrected derivation mode of the DIMD satisfies at least one of the following conditions: the corrected derivation mode of the DIMD does not include the derivation mode of the DIMD before the correction; the corrected derivation modes of the DIMD does not include the modes in the MPM mode set; and the corrected derivation modes of the DIMD does not include modes in the non-MPM mode set.

In an embodiment, the DIMD result for the current block includes the derivation mode of the DIMD. The derivation mode of the DIMD includes the luminance derivation mode of the DIMD and the chrominance derivation mode of the DIMD. The correction unit 802 is specifically configured to: correct the luminance derivation mode of the DIMD; or correct the chrominance derivation mode of the DIMD; or correct both the luminance derivation mode of the DIMD and the chrominance derivation mode of the DIMD. The luminance derivation mode of the DIMD and the chrominance derivation mode of the DIMD allow correction using same or different correction values, and the luminance derivation mode of the DIMD and the chrominance derivation mode of the DIMD allow correction using same or different correction value sets.

In an embodiment, the DIMD result for the current block includes the derivation mode of the DIMD. The derivation mode of the DIMD includes the first luminance derivation mode of the DIMD and the second luminance derivation mode of the DIMD. The correction unit 802 is specifically configured to: correct the first luminance derivation mode of the DIMD; or correct the second luminance derivation mode of the DIMD; or correct both the first luminance derivation mode of the DIMD and the second luminance derivation mode of the DIMD. The first luminance derivation mode of the DIMD and the second luminance derivation mode of the DIMD allow correction using same or different correction values, and the first luminance derivation mode of the DIMD and the second luminance derivation mode of the DIMD allow correction using same or different correction value sets.

In an embodiment, the DIMD result for the current block includes the derivation mode of the DIMD. The derivation mode of the DIMD includes the first luminance derivation mode of the DIMD and the second luminance derivation mode of the DIMD. The prediction unit 803 is specifically configured to: predict the intra prediction mode of the current block using a corrected first luminance derivation mode of the DIMD, and determine a predicted value of the corrected first luminance derivation mode of the DIMD as a predicted value of a luminance component of the current block; or predict the intra prediction mode of the current block using a corrected second luminance derivation mode of the DIMD, and determine a predicted value of the corrected second luminance derivation mode of the DIMD as the predicted value of the luminance component of the current block; or predict the intra prediction mode of the current block respectively using a corrected first luminance derivation mode of the DIMD and a planar mode, and perform weighted fusion on a predicted value of the corrected first luminance derivation mode of the DIMD and a predicted value of the planar mode, to obtain the predicted value of the luminance component of the current block; or predict the intra prediction mode of the current block respectively using a corrected second luminance derivation mode of the DIMD and the planar mode, and perform weighted fusion on a predicted value of the corrected second luminance derivation mode of the DIMD and the predicted value of the planar mode, to obtain the predicted value of the luminance component of the current block; or predict the intra prediction mode of the current block respectively using a corrected first luminance derivation mode of the DIMD and a corrected second luminance derivation mode of the DIMD, and perform weighted fusion on the predicted value of the corrected first luminance derivation mode of the DIMD and the predicted value of the corrected second luminance derivation mode of the DIMD, to obtain the predicted value of the luminance component of the current block; or predict the intra prediction mode of the current block respectively using a corrected first luminance derivation mode of the DIMD, a second luminance derivation mode of the DIMD, and the planar mode, and perform weighted fusion on the predicted value of the corrected first luminance derivation mode of the DIMD, the predicted value of the second luminance derivation mode of the DIMD, and the predicted value of the planar mode, to obtain the predicted value of the luminance component of the current block; or predict the intra prediction mode of the current block respectively using a first luminance derivation mode of the DIMD, a corrected second luminance derivation mode of the DIMD, and the planar mode, and perform weighted fusion on the predicted value of the first luminance derivation mode of the DIMD, the predicted value of the corrected second luminance derivation mode of the DIMD, and the predicted value of the planar mode, to obtain the predicted value of the luminance component of the current block; or predict the intra prediction mode of the current block respectively using a corrected first luminance derivation mode of the DIMD, a corrected second luminance derivation mode of the DIMD, and the planar mode, and perform weighted fusion on the predicted value of the corrected first luminance derivation mode of the DIMD, the predicted value of the corrected second luminance derivation mode of the DIMD, and the predicted value of the planar mode, to obtain the predicted value of the luminance component of the current block.

In an embodiment, the DIMD result for the current block includes the derivation mode of the DIMD. The derivation mode of the DIMD includes the chrominance derivation mode of the DIMD. The prediction unit 803 is specifically configured to: predict the intra prediction mode of the current block using the corrected chrominance derivation mode of the DIMD, and determine a predicted value of the corrected chrominance derivation mode of the DIMD as a predicted value of a chrominance component of the current block.

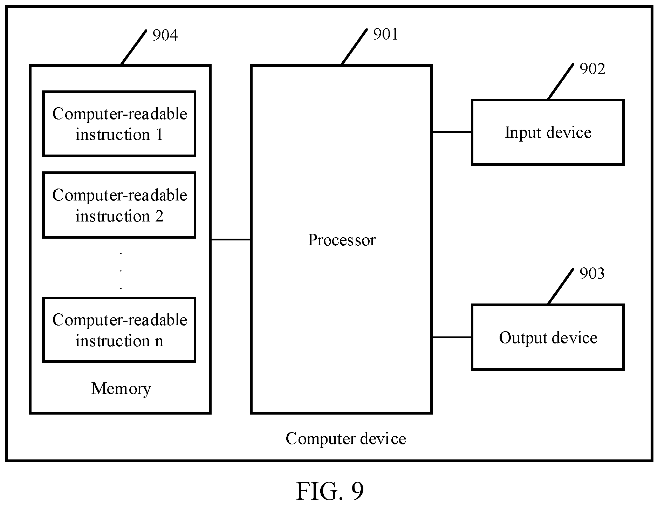

Further, an embodiment of this application further provides a schematic structural diagram of a computer device. FIG. 9 is a schematic structural diagram of a computer device according to an exemplary embodiment of this application. The computer device may include: a processor 901, an input device 902, an output device 903, and a memory 904. The processor 901, the input device 902, the output device 903, and the memory 904 are connected through a bus. The memory 904 is configured to store computer-readable instructions, and the processor 901 is configured to execute a computer program stored in the memory 904.

In an embodiment, the computer device may be the encoding device described in the above embodiments. In this embodiment, the processor 901 performs the operations of the video processing method related to encoding performed by the encoding device by executing the computer-readable instructions in the memory 904.

In another embodiment, the computer device may be the decoding device described in the above embodiments. In this embodiment, the processor 901 performs the operations of the video processing method related to decoding performed by the decoding device by executing the computer-readable instructions in the memory 904.

In addition, an embodiment of this application further provides a computer-readable storage medium. The computer-readable storage medium has computer-readable instructions stored therein. The computer-readable instructions include program instructions. When a processor executes the computer-readable instructions, the methods in the embodiments corresponding to FIG. 5 and FIG. 6 can be performed. For technical details and beneficial effects that are not disclosed in the embodiment of the computer-readable storage medium of this application, refer to the descriptions of the method embodiments of this application. Details are not described herein again. In an example, the computer-readable instructions may be deployed to be executed on a computer device, or deployed to be executed on a plurality of computer devices at the same location, or deployed to be executed on a plurality of computer devices that are distributed in a plurality of locations and interconnected by using a communication network.

According to an aspect of this application, a computer program product is provided. The computer program product includes computer-readable instructions. The computer-readable instructions are stored in a computer-readable storage medium. A processor of the computer device reads the computer-readable instructions from the computer-readable storage medium, and executes the computer-readable instructions, to cause the computer device to perform the methods in the embodiments corresponding to FIG. 5 and FIG. 6. For technical details and beneficial effects that are not disclosed in the embodiment of the computer program product of this application, refer to the descriptions in the method embodiments of this application.

A person skilled in the art may understand that all or some of the procedures of the methods of the foregoing embodiments may be implemented by computer-readable instructions instructing relevant hardware. A program may be stored in a computer-readable storage medium. When the program is executed, the procedures of the foregoing method embodiments may be implemented. The storage medium may be a magnetic disk, an optical disc, a read-only memory (ROM), a random access memory (RAM), or the like. What is disclosed above is merely exemplary embodiments of this application, and certainly is not intended to limit the protection scope of this application. Therefore, equivalent variations made in accordance with the claims of this application shall fall within the scope of this application.

**Claims**

1. A video processing method, performed by a computer device, the method comprising:

   performing decoder-side intra mode derivation processing on a current block in a video bitstream, to obtain a decoder-side intra mode derivation result for the current block; the video bitstream comprising correction indication information for the decoder-side intra mode derivation for the current block, and the current block being a coding unit in the video bitstream for decoding processing;
   correcting the decoder-side intra mode derivation result for the current block according to the correction indication information; and
   predicting an intra prediction mode of the current block based on a corrected decoder-side intra mode derivation result, to obtain a predicted value for the current block, the predicted value for the current block being configured for reconstructing a decoded image corresponding to the current block.

2. The method according to claim 1, wherein the correction indication information comprises a correction flag bit, the correction flag bit being configured for indicating whether the decoder-side intra mode derivation result for the current block needs to be corrected; and

   the decoder-side intra mode derivation result for the current block needs to be corrected when the correction flag bit is a first preset value, and the decoder-side intra mode derivation result for the current block does not need to be corrected when the correction flag bit is a second preset value,
   the correction flag bit being set in a related syntactic element of the current block.

3. The method according to claim 1 or 2, wherein if the decoder-side intra mode derivation result for the current block needs to be corrected, the correction indication information further comprises correction parameter indication information, the correction parameter indication information being configured for indicating a correction value used in correcting the decoder-side intra mode derivation result for the current block; and
   the correction value belongs to a correction value set, and the correction value set comprises any one or more of the following:

   a predefined value set;
   a value set that allows dynamic adjustment in a codec process;
   a value set constructed based on encoded or decoded information; or
   a value set defined by a high-level syntactic element.

4. The method according to claim 3, wherein the correction parameter indication information comprises a sign flag bit and an amplitude flag bit, the sign flag bit being configured for indicating a sign of the correction value, and the amplitude flag bit being configured for indicating an amplitude value of the correction value;

   the sign of the correction value is a positive sign when the sign flag bit is the first preset value; and the sign of the correction value is a negative sign when the sign flag bit is the second preset value; or the sign of the correction value is a negative sign when the sign flag bit is the first preset value; and the sign of the correction value is a positive sign when the sign flag bit is the second preset value; and
   the correction value set comprises one or more values, a plurality of values having a same sign being set at different levels according to amplitude values; and the amplitude flag bit comprises one or more level flag bits, the level flag bit being configured for indicating a level of the amplitude value of the correction value in the correction value set.

5. The method according to claim 3, wherein the correction value set comprises one or more values, the one or more values being sequentially arranged in the correction value set; and
   the correction parameter indication information comprises an index flag bit, the index flag bit being configured for indicating an arrangement position of the correction value in the correction value set.

6. The method according to claim 3, wherein the decoder-side intra mode derivation result for the current block comprises a derivation mode of decoder-side intra mode derivation, the derivation mode of the decoder-side intra mode derivation having a mode index; and
   the correcting the decoder-side intra mode derivation result for the current block according to the correction indication information comprises:

adjusting the mode index of the derivation mode of the decoder-side intra mode derivation by using the correction value, to correct the derivation mode of the decoder-side intra mode derivation.

7. The method according to claim 6, wherein the derivation mode of the decoder-side intra mode derivation comprises two luminance derivation modes of the decoder-side intra mode derivation, and any one of the luminance derivation modes of the decoder-side intra mode derivation is represented as $M_i$, i being a positive integer, and i being less than or equal to a total number of luminance derivation modes of the decoder-side intra mode derivation; and the method further comprises:

mapping corrected $M_i$ to a special intra prediction mode if $M_i$ is a planar mode or another non-intra angular mode, the special intra prediction mode comprises any one of the following: a direct current mode, a horizontal mode, a diagonal mode, a vertical mode, or an anti-diagonal mode.

8. The method according to claim 6, wherein the derivation mode of the decoder-side intra mode derivation comprises two luminance derivation modes of the decoder-side intra mode derivation, and any one of the luminance derivation modes of the decoder-side intra mode derivation is represented as $M_i$, i being a positive integer, and i being less than or equal to a total number of luminance derivation modes of the decoder-side intra mode derivation; and the method further comprises:

mapping corrected $M_i$ to any mode in the intra angular mode set if the corrected $M_i$ does not belong to an intra angular mode set, wherein
when the correction value used by $M_i$ is a positive number, a mode index of a mapping mode corresponding to the corrected $M_i$ in the intra angular mode set is $((m_i - 1 + (M_{delta} - 1)) \% \text{mod}) + 2$; and when the correction value used by the $M_i$ is a negative number, the mode index of the mapping mode corresponding to the corrected $M_i$ in the intra angular mode set is $((m_i + \text{offset} - (M_{delta} - 1)) \% \text{mod}) + 2$,
$m_i$ being the mode index of $M_i$; $M_{delta}$ being the correction value used by $M_i$; offset = a maximum value of the mode index in the intra angular mode set - 5; and mod = offset + 3.

9. The method according to claim 3, wherein a corrected derivation mode of decoder-side intra mode derivation satisfies at least one of the following conditions:

the corrected derivation mode of the decoder-side intra mode derivation does not comprise a derivation mode of the decoder-side intra mode derivation before the correction;
the corrected derivation mode of the decoder-side intra mode derivation does not comprise a mode in a most probable mode set; and
the corrected derivation mode of the decoder-side intra mode derivation does not comprise a mode in a non-most probable mode set.

10. The method according to claim 1, wherein the decoder-side intra mode derivation result for the current block comprises a derivation mode of the decoder-side intra mode derivation, and the derivation mode of the decoder-side intra mode derivation comprises a luminance derivation mode of the decoder-side intra mode derivation and a chrominance derivation mode of the decoder-side intra mode derivation; and the correcting the decoder-side intra mode derivation result for the current block comprises:

correcting the luminance derivation mode of the decoder-side intra mode derivation; or
correcting the chrominance derivation mode of the decoder-side intra mode derivation; or
correcting both the luminance derivation mode of the decoder-side intra mode derivation and the chrominance derivation mode of the decoder-side intra mode derivation, wherein
the luminance derivation mode of the decoder-side intra mode derivation and the chrominance derivation mode of the decoder-side intra mode derivation allow correction using same or different correction values, and the luminance derivation mode of the decoder-side intra mode derivation and the chrominance derivation mode of the decoder-side intra mode derivation allow correction using same or different correction value sets.

11. The method according to claim 1, wherein the decoder-side intra mode derivation result for the current block comprises a derivation mode of the decoder-side intra mode derivation, and the derivation mode of the decoder-side intra mode derivation comprises a first luminance derivation mode of the decoder-side intra mode derivation and a second luminance derivation mode of the decoder-side intra mode derivation; and the correcting the decoder-side intra mode derivation result for the current block comprises:

correcting the first luminance derivation mode of the decoder-side intra mode derivation; or
correcting the second luminance derivation mode of the decoder-side intra mode derivation; or
correcting both the first luminance derivation mode of the decoder-side intra mode derivation and the second luminance derivation mode of the decoder-side intra mode derivation,
the first luminance derivation mode of the decoder-side intra mode derivation and the second luminance derivation mode of the decoder-side intra mode derivation allow correction using same or different correction values, and the first luminance derivation mode of the decoder-side intra mode derivation and the second luminance derivation mode of the decoder-side intra mode derivation allow correction using same or different correction value sets.

12. The method according to claim 1, wherein the decoder-side intra mode derivation result for the current block comprises a derivation mode of the decoder-side intra mode derivation, and the derivation mode of the decoder-side intra mode derivation comprises a first luminance derivation mode of the decoder-side intra mode derivation and a second luminance derivation mode of the decoder-side intra mode derivation; and
the predicting an intra prediction mode of the current block based on a corrected decoder-side intra mode derivation result, to obtain a predicted value for the current block comprises:

predicting the intra prediction mode of the current block using a corrected first luminance derivation mode of the decoder-side intra mode derivation, and determining a predicted value of the corrected first luminance derivation mode of the decoder-side intra mode derivation as a predicted value of a luminance component of the current block; or
predicting the intra prediction mode of the current block using a corrected second luminance derivation mode of the decoder-side intra mode derivation, and determining a predicted value of the corrected second luminance derivation mode of the decoder-side intra mode derivation as the predicted value of the luminance component of the current block; or
predicting the intra prediction mode of the current block respectively using a corrected first luminance derivation mode of the decoder-side intra mode derivation and a planar mode, and performing weighted fusion on a predicted value of the corrected first luminance derivation mode of the decoder-side intra mode derivation and a predicted value of the planar mode, to obtain the predicted value of the luminance component of the current block; or
predicting the intra prediction mode of the current block respectively using a corrected second luminance derivation mode of the decoder-side intra mode derivation and the planar mode, and performing weighted fusion on a predicted value of the corrected second luminance derivation mode of the decoder-side intra mode derivation and the predicted value of the planar mode, to obtain the predicted value of the luminance component of the current block; or
predicting the intra prediction mode of the current block respectively using a corrected first luminance derivation mode of the decoder-side intra mode derivation and a corrected second luminance derivation mode of the decoder-side intra mode derivation, and performing weighted fusion on the predicted value of the corrected first luminance derivation mode of the decoder-side intra mode derivation and the predicted value of the corrected second luminance derivation mode of the decoder-side intra mode derivation, to obtain the predicted value of the luminance component of the current block; or
predicting the intra prediction mode of the current block respectively using a corrected first luminance derivation mode of the decoder-side intra mode derivation, a second luminance derivation mode of the decoder-side intra mode derivation, and the planar mode, and performing weighted fusion on the predicted value of the corrected first luminance derivation mode of the decoder-side intra mode derivation, the predicted value of the second luminance derivation mode of the decoder-side intra mode derivation, and the predicted value of the planar mode, to obtain the predicted value of the luminance component of the current block; or
predicting the intra prediction mode of the current block respectively using a first luminance derivation mode of the decoder-side intra mode derivation, a corrected second luminance derivation mode of the decoder-side intra mode derivation, and the planar mode, and performing weighted fusion on the predicted value of the first luminance derivation mode of the decoder-side intra mode derivation, the predicted value of the corrected second luminance derivation mode of the decoder-side intra mode derivation, and the predicted value of the planar mode, to obtain the predicted value of the luminance component of the current block; or
predicting the intra prediction mode of the current block respectively using a corrected first luminance derivation mode of the decoder-side intra mode derivation, a corrected second luminance derivation mode of the decoder-side intra mode derivation, and the planar mode, and performing weighted fusion on the predicted value of the corrected first luminance derivation mode of the decoder-side intra mode derivation, the predicted value of the corrected second luminance derivation mode of the decoder-side intra mode derivation, and the predicted value of the planar mode, to obtain the predicted value of the luminance component of the current block.

13. The method according to claim 1, wherein the decoder-side intra mode derivation result for the current block comprises the derivation mode of the decoder-side intra mode derivation, and the derivation mode of the decoder-side intra mode derivation comprises a chrominance derivation mode of the decoder-side intra mode derivation; and

the predicting an intra prediction mode of the current block based on a corrected decoder-side intra mode derivation result, to obtain a predicted value for the current block comprises:

predicting the intra prediction mode of the current block using the corrected chrominance derivation mode of the decoder-side intra mode derivation, and determining a predicted value of the corrected chrominance derivation mode of the decoder-side intra mode derivation as a predicted value of a chrominance component of the current block.

14. A video processing method, performed by a computer device, the method comprising:

performing decoder-side intra mode derivation processing on a current block of a video, to obtain a decoder-side intra mode derivation result for the current block, the current block being a coding unit in the video for encoding processing;

generating correction indication information for the decoder-side intra mode derivation for the current block according to the decoder-side intra mode derivation result for the current block;

correcting the decoder-side intra mode derivation result for the current block according to the correction indication information;

predicting an intra prediction mode of the current block based on a corrected decoder-side intra mode derivation result, to obtain a predicted value for the current block, the predicted value for the current block being configured for reconstructing a decoded image corresponding to the current block; and

encoding the video based on the correction indication information and the predicted value for the current block, to generate a video bitstream.

15. The method according to claim 14, wherein the decoder-side intra mode derivation result for the current block comprises a derivation mode of decoder-side intra mode derivation; and the generating correction indication information for the decoder-side intra mode derivation for the current block according to the decoder-side intra mode derivation result for the current block comprises:

obtaining a correction value set, the correction value set comprising one or more values;

pre-correcting the derivation mode of the decoder-side intra mode derivation using the values in the correction value set;

obtaining a rate-distortion cost set, the rate-distortion cost set comprising a rate-distortion cost of the derivation mode of the decoder-side intra mode derivation obtained before pre-correction and a rate-distortion cost of the derivation mode of the decoder-side intra mode derivation obtained after the pre-correction performed using the values in the correction value set;

generating the correction indication information indicating that the derivation mode of the decoder-side intra mode derivation does not need to be corrected, if the rate-distortion cost of the derivation mode of the decoder-side intra mode derivation obtained before the pre-correction is a smallest value in the rate-distortion cost set; and

generating the correction indication information indicating that the derivation mode of the decoder-side intra mode derivation needs to be corrected and comprising a correction value, if the rate-distortion cost of the derivation mode of the decoder-side intra mode derivation obtained before the pre-correction is not the smallest value in the rate-distortion cost set, the correction value being a target value in the correction value set corresponding to a smallest rate-distortion cost in the rate-distortion cost set.

16. A video processing apparatus, comprising:

a processing unit, configured to perform decoder-side intra mode derivation processing on a current block in a video bitstream, to obtain a decoder-side intra mode derivation result for the current block, the video bitstream comprising correction indication information for the decoder-side intra mode derivation for the current block, and the current block being a coding unit in the video bitstream for decoding processing;

a correction unit, configured to correct the decoder-side intra mode derivation result for the current block according to the correction indication information; and

a prediction unit, configured to predict an intra prediction mode of the current block based on a corrected decoder-side intra mode derivation result, to obtain a predicted value for the current block, the predicted value for the current block being configured for reconstructing a decoded image corresponding to the current block.

17. A video processing apparatus, comprising:

a processing unit, configured to perform decoder-side intra mode derivation processing on a current block of a video, to obtain a decoder-side intra mode derivation result for the current block, the current block being a coding unit in the video for encoding processing; and
the processing unit being further configured to generate correction indication information for the decoder-side intra mode derivation for the current block according to the decoder-side intra mode derivation result for the current block;
a correction unit, configured to correct the decoder-side intra mode derivation result for the current block according to the correction indication information; and
a prediction unit, configured to predict an intra prediction mode of the current block based on a corrected decoder-side intra mode derivation result, to obtain a predicted value for the current block, the predicted value for the current block being configured for reconstructing a decoded image corresponding to the current block; and
the processing unit being further configured to encode the video based on the correction indication information and the predicted value for the current block, to generate a video bitstream.

18. A computer device, comprising:

a processor, configured to execute computer-readable instructions; and
a computer-readable storage medium, the computer-readable storage medium having the computer-readable instructions stored therein, the computer-readable instructions, when executed by the processor, performing the video processing method according to any one of claims 1 to 15.

19. A computer-readable storage medium, the computer-readable storage medium having computer-readable instructions stored therein, the computer-readable instructions, when executed by a processor, performing the video processing method according to any one of claims 1 to 15.

20. A computer program product, the computer program product comprising computer-readable instructions, the computer-readable instructions, when executed by a processor, implementing the video processing method according to any one of claims 1 to 15.

Mode 0: Planar mode

Mode 1: DC mode

Modes 2 to 66: 65 angular modes

FIG. 1

101

T

100

Current block

FIG. 2

T

30

302

301

FIG. 3

| Encoding device | | Decoding device |
| --- | --- | --- |

Obtain a DIMD result for a current block in a video

Generate correction indication information according to the DIMD result for the current block

Correct the DIMD result for the current block based on the correction indication information

Predict an intra prediction mode of the current block based on a corrected DIMD result, to obtain a predicted value

Perform encoding based on the correction indication information and the predicted value, to generate a video bitstream

Transmit the video bitstream

Obtain the DIMD result for the current block in the video bitstream

Correct the DIMD result for the current block according to the correction indication information

Predict the intra prediction mode of the current block based on the corrected DIMD result, to obtain the predicted value

Reconstruct a corresponding decoded image based on the predicted value for the current block

FIG. 4

Perform DIMD processing on a current block of a video, to obtain a DIMD result for the current block — S501

Generate correction indication information for DIMD of the current block according to the DIMD result for the current block — S502

Correct the DIMD result for the current block according to the correction indication information — S503

Predict an intra prediction mode of the current block based on a corrected DIMD result, to obtain a predicted value for the current block, the predicted value for the current block being configured for reconstructing a decoded image corresponding to the current block — S504

Encode the video based on the correction indication information and the predicted value for the current block, to generate a video bitstream — S505

FIG. 5

Perform DIMD processing on a current block in a video bitstream, to obtain a DIMD result for the current block, the video bitstream including correction indication information for the DIMD of the current block, and the current block being a coding unit in the video bitstream for decoding — S601

Correct the DIMD result for the current block according to the correction indication information — S602

Predict an intra prediction mode of the current block based on a corrected DIMD result, to obtain a predicted value for the current block, the predicted value for the current block being configured for reconstructing a decoded image corresponding to the current block — S603

FIG. 6

Processing unit — 701

Correction unit — 702

Prediction unit — 703

Video processing apparatus

FIG. 7

Processing unit — 801

Correction unit — 802

Prediction unit — 803

Video processing apparatus

FIG. 8

FIG. 9

## INTERNATIONAL SEARCH REPORT

| International application No. |
| --- |
| **PCT/CN2023/106438** |

| A. | CLASSIFICATION OF SUBJECT MATTER |
| --- | --- |
| | H04N19/11(2014.01)i |

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT; ENTXTC; VEN; WPABS; WPABSC; CSDN; CNKI; JVET: DIMD, 解码端, 帧内, 模式, 推导, 修正, 纠正, 修改, 改进, 校正, 编码, 率失真, decoder-sid, intra, mode, derivation, modify, modifaction, correction, correct, decode, encode, rate, distortion, optimization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114938449 A (ZHEJIANG DAHUA TECHNOLOGY CO., LTD.) 23 August 2022 (2022-08-23) entire document | 1-20 |
| A | CN 113767633 A (TENCENT AMERICA LLC) 07 December 2021 (2021-12-07) entire document | 1-20 |
| A | CN 114765687 A (FACEMON CO., LTD.) 19 July 2022 (2022-07-19) entire document | 1-20 |
| A | CN 112335243 A (INDUSTRY ACADEMY COOPERATION FOUNDATION OF SEJONG UNIVERSITY) 05 February 2021 (2021-02-05) entire document | 1-20 |
| A | WO 2022214028 A1 (BEIJING BYTEDANCE NETWORK TECHNOLOGY CO., LTD.; BYTEDANCE INC.) 13 October 2022 (2022-10-13) entire document | 1-20 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **31 October 2023** | **01 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/106438**

| Patent document cited in search report | | | Publication date (day/month/year) | Patent family member(s) | | | Publication date (day/month/year) |
|---|---|---|---|---|---|---|---|
| CN | 114938449 | A | 23 August 2022 | None | | | |
| CN | 113767633 | A | 07 December 2021 | US | 2022030252 | A1 | 27 January 2022 |
| | | | | US | 11595666 | B2 | 28 February 2023 |
| | | | | JP | 2023126577 | A | 07 September 2023 |
| | | | | US | 2021243452 | A1 | 05 August 2021 |
| | | | | US | 11197001 | B2 | 07 December 2021 |
| | | | | EP | 3925221 | A1 | 22 December 2021 |
| | | | | EP | 3925221 | A4 | 17 August 2022 |
| | | | | WO | 2021158615 | A1 | 12 August 2021 |
| | | | | JP | 2022529645 | A | 23 June 2022 |
| | | | | JP | 7317994 | B2 | 31 July 2023 |
| | | | | US | 2023171412 | A1 | 01 June 2023 |
| | | | | KR | 20210134407 | A | 09 November 2021 |
| CN | 114765687 | A | 19 July 2022 | US | 2022224922 | A1 | 14 July 2022 |
| | | | | US | 11563957 | B2 | 24 January 2023 |
| CN | 112335243 | A | 05 February 2021 | WO | 2019245261 | A1 | 26 December 2019 |
| | | | | US | 2021195238 | A1 | 24 June 2021 |
| WO | 2022214028 | A1 | 13 October 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022112865986